(19) **Europäisches Patentamt European Patent Office Office européen des brevets**

(11) **EP 4 120 751 A1**

(12) **EUROPEAN PATENT APPLICATION**
published in accordance with Art. 153(4) EPC

(43) Date of publication:
**18.01.2023 Bulletin 2023/03**

(21) Application number: **20930288.4**

(22) Date of filing: **10.04.2020**

(51) International Patent Classification (IPC):
*H04W 52/38* (2009.01)

(52) Cooperative Patent Classification (CPC):
**H04W 52/38**

(86) International application number:
**PCT/CN2020/084325**

(87) International publication number:
**WO 2021/203445 (14.10.2021 Gazette 2021/41)**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**
</td><td>

(72) Inventors:
• LIU, Xianda
  **Shenzhen, Guangdong 518129 (CN)**
• LI, Xueru
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**
</td></tr>
</table>

(54) **COMMUNICATION METHOD, APPARATUS AND SYSTEM**

(57) This application provides a communication method, apparatus, and system, to improve transmission performance in a communication process. The method includes: A terminal device determines a power control parameter of a PUSCH based on precoding indication information used by the PUSCH, where the precoding indication information includes n TPMIs, each TPMI corresponds to a set of power control parameters, at least two of the n TPMIs respectively correspond to different power control parameters, and each TPMI corresponds to some time-frequency resources occupied by the PUSCH, where n is a positive integer. The terminal device sends the PUSCH based on the power control pa- rameter.

Network device

Terminal device

S201: Send precoding indication information used by a physical downlink shared channel PUSCH

S202: Determine a power control parameter of the physical downlink shared channel PUSCH based on the precoding indication information used by the physical downlink shared channel PUSCH

S203: Physical downlink shared channel PUSCH

FIG. 2

**Description**

**TECHNICAL FIELD**

This application relates to the field of communication technologies, and in particular, to a communication method, apparatus, and system.

**BACKGROUND**

A plurality of network devices may coordinately receive and process a physical uplink shared channel (physical uplink shared channel, PUSCH), to improve reliability of PUSCH transmission. Generally, a network device sends downlink control information (downlink control information, DCI). A sounding reference signal indication (sounding reference signal indication, SRI) field included in the DCI may indicate a power control parameter. A terminal device determines transmit power of a PUSCH based on the power control parameter indicated by the SRI field, and sends the PUSCH to the network device based on the transmit power.

Transmission links of a same terminal device to different network devices are independent. Therefore, a sending mechanism needs to be designed for the terminal device to ensure transmission quality of a sent signal arriving at different network devices, to improve the reliability of PUSCH transmission. In an existing mechanism, a same PUSCH usually uses one set of power control parameters and one precoding matrix, which cannot adapt to channel conditions of different transmission links, such as received signal received power and signal-to-noise ratios. In a scenario in which network devices use non-coherent reception and perform soft combination on signals, a terminal device may send a signal to different network devices through different antenna ports. Because transmission paths of the signal to different network devices are independent, transmission performance is affected by using a same set of power control parameters and a same precoding matrix.

**SUMMARY**

This application provides a communication method, apparatus, and system, to improve transmission performance in a communication process.

According to a first aspect, an embodiment of this application provides a communication method. The method includes: A terminal device determines a power control parameter of a physical uplink shared channel PUSCH based on precoding indication information used by the PUSCH. The precoding indication information includes n transmitted precoding matrix indicators TPMIs, each TPMI corresponds to a set of power control parameters, at least two of the n TPMIs respectively correspond to different power control parameters, each TPMI corresponds to some time-frequency resources occupied by the PUSCH, and n is a positive integer. The terminal device sends the PUSCH based on the power control parameter.

It may be understood that the communication method provided in this embodiment of this application is also applicable to another uplink signal, for example, a physical uplink control channel PUCCH. That is, in this embodiment of this application, only the PUSCH is used as an example to describe the communication method. In an actual communication process, the PUSCH may be replaced with another uplink signal (such as the PUCCH). For a communication process of the another uplink signal, refer to a communication process shown for the PUSCH.

In a possible design, a physical time-frequency resource corresponding to each TPMI corresponds to a set of power control parameters, that is, the terminal device may determine a set of power control parameters based on a physical time-frequency resource corresponding to each of the n TPMIs.

In this embodiment of this application, in a communication process, the terminal device may determine, based on the precoding indication information indicating the PUSCH, a power control parameter of a TPMI indicated by the precoding indication information, and send the PUSCH based on the power control parameter. Therefore, in different transmission mechanisms, the terminal device may implement PUSCH transmission by using an adapted power control parameter, to improve transmission performance. In addition, different TPMIs may adapt to transmission paths to different network devices, and then corresponding power control parameters are used, so that transmission performance of repeated transmissions in different subbands or different time domains may be improved. In addition, a network device may indicate the n TPMIs at a time by using the precoding indication information, to reduce redundancy in indicating the TPMIs and reduce overheads for indicating the TPMIs. In addition, each antenna port that is of the terminal device and that is configured to transmit the PUSCH may be associated with a power amplifier, and each power amplifier may transmit the PUSCH on a bandwidth part, to improve a power spectral density of PUSCH transmission.

In a possible design, each of the n TPMIs corresponds to a matrix, a row of the matrix corresponds to a transmit antenna port for sending the PUSCH, a column of the matrix corresponds to a transport layer of the PUSCH, and a quantity of rows in the matrix is greater than or equal to a quantity of columns in the matrix.

In this embodiment of this application, indication is performed by using the transmit antenna port corresponding to the TPMI, which can ensure that antenna ports adapting to different transmission paths use independent power control, thereby improving performance of PUSCH transmission.

In a possible design, the n TPMIs correspond to N subbands, each of the N subbands includes one or more continuous resource blocks RBs, TPMIs used to send the PUSCH on the RBs included in each subband are the same, an RB occupied by the PUSCH includes the N subbands, n is less than or equal to N, and N is a positive integer.

In a possible design, both n and N are greater than 1.

In a possible design, the subband quantity N is preconfigured.

In a possible design, the subband quantity N is determined based on scheduled bandwidth of the PUSCH.

In a possible design, the subband quantity N is determined based on a quantity of the TPMIs, for example, the subband quantity N = the quantity n of the TPMIs.

In a possible design, a quantity of RBs included in each subband is preconfigured.

In a possible design, a correspondence between the n TPMIs and the N subbands may be predefined. For example, the n TPMIs in an index order of the TPMIs sequentially correspond to the N subbands in ascending or descending order of frequencies.

In a possible design, the n TPMIs may be directly indicated by the precoding indication information of the PUSCH. For example, the precoding indication information of the PUSCH includes n fields respectively used to indicate the n TPMIs (that is, each field is used to indicate one TPMI). Alternatively, one field has one state to indicate the n TPMIs together.

In a possible design, the precoding indication information of the PUSCH indicates a TPMI group, the TPMI group includes n predefined TPMIs, and different TPMI groups include different TPMIs.

In a possible design, different TPMI groups include different quantities of TPMIs.

In a possible design, n=N, that is, the subband quantity may be directly determined based on a quantity of indicated TPMIs, or a quantity of TPMIs may be directly determined based on a quantity of indicated subbands. In this embodiment of this application, the terminal device may send the PUSCH to different network devices in different subbands through different transmit antenna ports by using different power control parameters. Different TPMIs and power control parameters may adapt to transmission paths to different network devices, thereby improving performance of PUSCH transmission in different subbands.

In a possible design, the n TPMIs have a same coherence type, and the coherence type includes a non-coherent type or a partially coherent type.

In a possible design, the n TPMIs respectively fall into at least two TPMI groups, and TPMIs belonging to a same TPMI group correspond to a same power control parameter. When the n TPMIs belong to the non-coherent type, locations of non-zero elements of TPMIs in different TPMI groups are different. When the n TPMIs belong to the partially coherent type, locations of non-zero elements of TPMIs in different TPMI groups are different, and/or locations of non-zero elements of TPMIs in a same TPMI group are the same.

Optionally, the n TPMIs may alternatively belong to a fully coherent type.

In a possible design, that the n TPMIs have a same coherence type further includes: The coherence type of the n TPMIs is the fully coherent type, and the n TPMIs correspond to a same set of power control parameters.

In a possible design, the N subbands may be replaced with N time domain resources, for example, N OFDM symbol groups or N slots. In other words, the n TPMIs correspond to N time domain resources.

In a possible design, when the n TPMIs correspond to N time domain resources, before the terminal device determines the power control parameter of the PUSCH based on the precoding indication information used by the PUSCH, the terminal device may further receive first indication information. The first indication information is used to indicate a quantity N of repetitions of the PUSCH to be sent by the terminal device in time domain, N is a positive integer and N is greater than or equal to n, and each repetition in time domain is used to transmit a same transport block TB, and uses one of the n TPMIs.

That a terminal device determines a power control parameter of a PUSCH based on precoding indication information used by the PUSCH includes: The terminal device determines a TPMI used by the PUSCH that is to be sent at an $m^{th}$ time in N repeated transmissions, where $m \in \{1, 2, ... N\}$, and determines a power control parameter of the PUSCH that is to be sent at the $m^{th}$ time.

Optionally, the first indication information may further indicate a TPMI used to send the PUSCH each time.

In this embodiment of this application, different TPMIs may adapt to transmission paths to different network devices, and then corresponding power control parameters are used, to improve performance of repeated PUSCH transmissions in different time domains. For example, PUSCHs in different time domains may be separately received by different network devices and soft combination processing is performed, to obtain a diversity gain.

In a possible design, before the terminal device determines the power control parameter of the PUSCH based on the precoding indication information used by the PUSCH, the terminal device may further receive second indication information. The second indication information is used to indicate a transmission manner used by the PUSCH. In different transmission manners, power control parameters of the PUSCH are different. The different transmission manners include: a wideband precoding manner and a subband precoding manner, where the wideband precoding manner means that same precoding is used on all RBs in the scheduled bandwidth, and the subband precoding manner means that different precoding is used on different RBs in the scheduled bandwidth; or a fully coherent transmission manner and a non-fully coherent transmission manner, where the fully coherent transmission means that same flow data is sent by all antenna ports of the terminal device, and the non-fully coherent transmission manner means that same flow data is sent by some antenna ports; or a time domain repeated transmission manner and a non-time domain repeated transmission manner, where the non-time domain repeated transmission manner means that a transport block is continuously mapped to continuous time domain resources based on a uniform rule.

In a possible design, the power control parameter includes at least one of the following power control parameters: an open-loop power control parameter, a closed-loop power control parameter, a target value of transmit power, an offset of transmit power, a path loss measurement reference signal index value, and a transmit power adjustment amount.

According to a second aspect, an embodiment of this application further provides a communication method. The method includes: A network device indicates precoding indication information that is used by a terminal device to send a PUSCH. The precoding indication information includes n TPMIs, each TPMI corresponds to a set of power control parameters, at least two of the n TPMIs respectively correspond to different power control parameters, each TPMI corresponds to some time-frequency resources occupied by the PUSCH, and n is a positive integer. The network device receives the PUSCH.

It may be understood that the communication method provided in this embodiment of this application is also applicable to another uplink signal, for example, a PUCCH.

In a possible design, a physical time-frequency resource corresponding to each TPMI corresponds to a set of power control parameters.

In this embodiment of this application, in a communication process, the network device may indicate the precoding indication information of the PUSCH to the terminal device, and the terminal device may determine a power control parameter of a TPMI indicated by the precoding indication information, and send the PUSCH based on the power control parameter. Therefore, in different transmission mechanisms, the terminal device may implement PUSCH transmission by using an adapted power control parameter, to improve transmission performance. In addition, different TPMIs may adapt to transmission paths to different network devices, and then corresponding power control parameters are used, so that transmission performance of repeated transmissions in different subbands or different time domains may be improved. In addition, the network device may indicate the n TPMIs at a time by using the precoding indication information, to reduce redundancy in indicating the TPMIs and reduce overheads for indicating the TPMIs.

In a possible design, each of the n TPMIs corresponds to a matrix, a row of the matrix corresponds to a transmit antenna port for sending the PUSCH, a column of the matrix corresponds to a transport layer of the PUSCH, and a quantity of rows in the matrix is greater than or equal to a quantity of columns in the matrix.

In this embodiment of this application, indication is performed by using the transmit antenna port corresponding to the TPMI, so that antenna ports adapting to different transmission paths may use independent power control, thereby improving performance of PUSCH transmission.

In a possible design, the n TPMIs correspond to N subbands, each of the N subbands includes one or more continuous RBs, TPMIs used to send the PUSCH on the RBs included in each subband are the same, an RB occupied by the PUSCH includes the N subbands, n is less than or equal to N, and N is a positive integer.

In a possible design, both n and N are greater than 1.

In a possible design, the subband quantity N is preconfigured.

In a possible design, the subband quantity N is determined based on scheduled bandwidth of the PUSCH.

In a possible design, the subband quantity N is determined based on a quantity of the TPMIs, for example, the subband quantity N = the quantity n of the TPMIs.

In a possible design, a quantity of RBs included in each subband is preconfigured.

In a possible design, a correspondence between the n TPMIs and the N subbands may be predefined. For example, the n TPMIs in an index order of the TPMIs sequentially correspond to the N subbands in ascending or descending order of frequencies.

In a possible design, the n TPMIs may be directly indicated by the precoding indication information of the PUSCH. For example, the precoding indication information of the PUSCH includes n fields respectively used to indicate the n TPMIs (that is, each field is used to indicate one TPMI). Alternatively, one field has one state to indicate the n TPMIs together.

In a possible design, the precoding indication information of the PUSCH indicates a TPMI group, the TPMI group includes n predefined TPMIs, and different TPMI groups include different TPMIs.

In a possible design, different TPMI groups include different quantities of TPMIs.

In a possible design, n=N, that is, the subband quantity may be directly determined based on a quantity of indicated TPMIs, or a quantity of TPMIs may be directly determined based on a quantity of indicated subbands. In this embodiment of this application, the terminal device may send the PUSCH to different network devices in different subbands through different transmit antenna ports by using different power control parameters. Different TPMIs and power control parameters may adapt to transmission paths to different network devices, thereby improving performance of PUSCH transmission in different subbands.

In a possible design, the n TPMIs have a same coherence type, and the coherence type includes a non-coherent type or a partially coherent type.

In a possible design, the n TPMIs respectively fall into at least two TPMI groups, and TPMIs belonging to a same TPMI group correspond to a same power control parameter. When the n TPMIs belong to the non-coherent type, locations of non-zero elements of TPMIs in different TPMI groups are different. When the n TPMIs belong to the partially coherent type, locations of non-zero elements of TPMIs in different TPMI groups are different, and/or locations of non-zero elements of TPMIs in a same TPMI group are the same.

Optionally, the n TPMIs may alternatively belong to a fully coherent type.

In a possible design, that the n TPMIs have a same coherence type further includes: The coherence type of the n TPMIs is the fully coherent type, and the n TPMIs correspond to a same set of power control parameters.

In a possible design, the N subbands may be replaced with N time domain resources, for example, N OFDM symbol groups or N slots. In other words, the n TPMIs correspond to N time domain resources.

In a possible design, when the n TPMIs correspond to N time domain resources, that a network device indicates precoding indication information that is used by a terminal device to send a PUSCH includes: The network device sends first indication information. The first indication information is used to indicate a quantity N of repetitions of the PUSCH to be sent by the terminal device in time domain, N is a positive integer and N is greater than or equal to n, and each repetition in time domain is used to transmit a same transport block TB, and uses one of the n TPMIs.

In a possible design, the first indication information may further indicate a TPMI used to send the PUSCH each time.

In this embodiment of this application, different TPMIs may adapt to transmission paths to different network devices, and then corresponding power control parameters are used, to improve performance of repeated PUSCH transmissions in different time domains. For example, PUSCHs in different time domains may be separately received by different network devices and soft combination processing is performed, to obtain a diversity gain.

In a possible design, that a network device indicates precoding indication information that is used by UE to send a PUSCH includes: The network device sends second indication information. The second indication information is used to indicate a transmission manner used by the PUSCH. In different transmission manners, power control parameters corresponding to the TPMI are different. The different transmission manners include: a wideband precoding manner and a subband precoding manner; or a fully coherent transmission manner and a non-fully coherent transmission manner; or a time domain repeated transmission manner and a non-time domain repeated transmission manner.

In a possible design, the power control parameter includes at least one of the following power control parameters: an open-loop power control parameter, a closed-loop power control parameter, a target value of transmit power, an offset of transmit power, a path loss measurement reference signal index value, and a transmit power adjustment amount.

According to a third aspect, an embodiment of this application further provides a communication method. The method includes: A terminal device determines a power control parameter of a PUSCH based on sounding reference signal indication information used by the PUSCH. The sounding reference signal indication information includes index values of p sounding reference signal SRS resources, an index value of each SRS resource corresponds to a set of power control parameters, at least two of the index values of the p SRS resources correspond to different power control parameters, the index value of each SRS resource corresponds to some time-frequency resources occupied by the PUSCH, and p is a positive integer. The terminal device sends the PUSCH based on the power control parameter.

It may be understood that the communication method provided in this embodiment of this application is also applicable to another uplink signal, for example, a PUCCH.

In a possible design, index values of at least two SRS resources correspond to different time-frequency resources occupied by the PUSCH. Optionally, the index value of each SRS resource corresponds to a different time-frequency resource occupied by the PUSCH.

In a possible design, the index value of the SRS resource is used to indicate a precoding manner of the PUSCH. That is, the terminal device may determine the precoding manner of the PUSCH based on the index value of the SRS resource.

In a possible design, a port corresponding to the index value of the SRS resource is a port of the PUSCH.

In a possible design, the terminal device may send a precoded SRS on the SRS resource.

In this embodiment of this application, in a communication process, the terminal device may determine, based on the sounding reference signal indication information indicating the PUSCH, a power control parameter of an index value of an SRS resource indicated by the sounding reference signal indication information, and send the PUSCH based on the power control parameter. Index values of different SRS resources may adapt to transmission paths to different network devices, and then corresponding power control parameters are used, to improve transmission performance of repeated transmissions in different subbands or different time domains. In addition, a network device may indicate the index values of the p SRS resources at a time by using the sounding reference signal indication information, to reduce redundancy in indicating the index values of the SRS resources, and reduce overheads for indicating the index values of the SRS resources, to improve transmission performance of repeated transmissions in different subbands or different time domains.

In a possible design, the index values of the n SRS resources correspond to N subbands, each of the N subbands includes one or more continuous RBs, index values of corresponding SRS resources for sending the PUSCH on RBs included in each subband are the same, an RB occupied by the PUSCH includes the N subbands, n is less than or equal to N, and N is a positive integer.

In a possible design, both p and N are greater than 1.

In a possible design, the subband quantity N is preconfigured.

In a possible design, the subband quantity N is determined based on scheduled bandwidth of the PUSCH.

In a possible design, the subband quantity N is determined based on a quantity of the index values of the SRS resources, for example, the subband quantity N = the quantity p of the index values of the SRS resources.

In a possible design, a quantity of RBs included in each subband is preconfigured.

In a possible design, the index values of the p SRS resources may be directly indicated by the precoding indication information of the PUSCH. For example, the precoding indication information of the PUSCH includes p fields respectively used to indicate the index values of the p SRS resources (that is, each field is used to indicate an index value of one SRS resource). Alternatively, one field has one state to indicate the index values of the p SRS resources together.

In a possible design, the precoding indication information of the PUSCH indicates an SRS resource group, the SRS resource group includes p predefined SRS resources, and different SRS resource groups include different SRS resources.

In a possible design, different SRS resource groups include different quantities of SRS resources.

In a possible design, p=N, that is, the subband quantity may be directly determined based on a quantity of indicated SRS resources, or a quantity of SRS resources may be directly determined based on a quantity of indicated subbands. In this embodiment of this application, the terminal device may send, in different subbands through antenna ports corresponding to index values of different SRS resources, the PUSCH to different network devices by using different power control parameters, to improve performance of PUSCH transmission. Index values of different SRS resources and power control parameters may adapt to transmission paths to different network devices, thereby improving performance of PUSCH transmission in different subbands.

In a possible design, the p SRS resources respectively fall into at least two SRS resource groups, and SRS resources belonging to a same SRS resource group correspond to a same power control parameter.

In a possible design, the N subbands may be replaced with N time domain resources, for example, N OFDM symbol groups or N slots. In other words, the index values of the p SRS resources correspond to N time domain resources.

In a possible design, when the index values of the p SRS resources correspond to N time domain resources, before the terminal device determines the power control parameter of the PUSCH based on the sounding reference signal indication information used by the PUSCH, the terminal device may further receive third indication information. The third indication information is used to indicate a quantity N of repetitions of the PUSCH to be sent by the terminal device in time domain, N is a positive integer and N is greater than or equal to n, and each repetition in time domain is used to transmit a same transport block TB, and uses one of the p SRS resources.

That a terminal device determines a power control parameter of a PUSCH based on sounding reference signal indication information used by the PUSCH includes: The terminal device determines an index value of an SRS resource used by the PUSCH that is to be sent at an $m^{th}$ time, where $m \in \{1, 2, ... N\}$, and determines, based on the index value of the SRS resource, a power control parameter of the PUSCH that is to be sent at the $m^{th}$ time.

Optionally, the third indication information may further indicate an index value of an SRS resource used to send the PUSCH each time.

In this embodiment of this application, index values of different SRS resources may adapt to transmission paths to different network devices, and then corresponding power control parameters are used, to improve performance of repeated PUSCH transmissions in different time domains. For example, PUSCHs in different time domains may be separately received by different network devices and soft combination processing is performed, to obtain a diversity gain.

In a possible design, before the terminal device determines the power control parameter of the PUSCH based on the precoding indication information used by the PUSCH, the terminal device may further receive fourth indication information. The fourth indication information is used to indicate a transmission manner used by the PUSCH. In different transmission manners, power control parameters corresponding to the index value of the SRS resource are different. The different transmission manners include: a wideband precoding manner and a subband precoding manner, where the wideband precoding manner means that same precoding is used on all RBs in the scheduled bandwidth, and the subband precoding manner means that different precoding is used on different RBs in the scheduled bandwidth; or a time domain repeated transmission manner and a non-time domain repeated transmission manner, where the non-time domain repeated transmission manner means that a transport block is continuously mapped to continuous time domain resources based on a uniform rule.

In a possible design, the power control parameter includes at least one of the following power control parameters: an open-loop power control parameter, a closed-loop power control parameter, a target value of transmit power, an offset of transmit power, a path loss measurement reference signal index value, and a transmit power adjustment amount.

According to a fourth aspect, an embodiment of this application further provides a communication method. The method includes: A network device indicates sounding reference signal indication information that is used by a terminal device to send a PUSCH. The sounding reference signal indication information includes index values of p SRS resources, an index value of each SRS resource corresponds to a set of power control parameters, at least two of the index values of the p SRS resources correspond to different power control parameters, the index value of each SRS resource corresponds to some time-frequency resources occupied by the PUSCH, and p is a positive integer. The network device receives the PUSCH.

It may be understood that the communication method provided in this embodiment of this application is also applicable to another uplink signal, for example, a PUCCH.

In a possible design, index values of at least two SRS resources correspond to different time-frequency resources occupied by the PUSCH. Optionally, the index value of each SRS resource corresponds to a different time-frequency resource occupied by the PUSCH.

In a possible design, the index value of the SRS resource is used to indicate a precoding manner of the PUSCH. That is, the terminal device may determine the precoding manner of the PUSCH based on the index value of the SRS resource.

In a possible design, a port corresponding to the index value of the SRS resource is a port of the PUSCH.

In a possible design, the network device may receive a precoded SRS on the SRS resource.

In this embodiment of this application, in a communication process, the network device indicates the sounding reference signal indication information of the PUSCH, and the terminal device may determine a power control parameter of an index value of an SRS resource indicated by the sounding reference signal indication information, and send the PUSCH based on the power control parameter. Index values of different SRS resources may adapt to transmission paths to different network devices, and then corresponding power control parameters are used, to improve transmission performance of repeated transmissions in different subbands or different time domains. In addition, the network device may indicate the index values of the p SRS resources at a time by using the sounding reference signal indication information, to reduce redundancy in indicating the index values of the SRS resources, and reduce overheads for indicating the index values of the SRS resources.

In a possible design, the index values of the n SRS resources correspond to N subbands, each of the N subbands includes one or more continuous RBs, index values of SRS resources used to send the PUSCH on RBs included in each subband are the same, an RB occupied by the PUSCH includes the N subbands, n is less than or equal to N, and N is a positive integer.

In a possible design, both p and N are greater than 1.

In a possible design, the subband quantity N is preconfigured.

In a possible design, the subband quantity N is determined based on scheduled bandwidth of the PUSCH.

In a possible design, the subband quantity N is determined based on a quantity of the index values of the SRS resources, for example, the subband quantity N = the quantity p of the index values of the SRS resources.

In a possible design, a quantity of RBs included in each subband is preconfigured.

In a possible design, the index values of the p SRS resources may be directly indicated by the precoding indication information of the PUSCH. For example, the precoding indication information of the PUSCH includes p fields respectively used to indicate the index values of the p SRS resources (that is, each field is used to indicate an index value of one SRS resource). Alternatively, one field has one state to indicate the index values of the p SRS resources together.

In a possible design, the precoding indication information of the PUSCH indicates an SRS resource index value group, the SRS resource index value group includes index values of p predefined SRS resources, and different SRS resource index value groups include index values of different SRS resources.

In a possible design, different SRS resource index value groups include different quantities of index values of SRS resources.

In a possible design, p=N, that is, the subband quantity may be directly determined based on a quantity of index values of indicated SRS resources, or a quantity of index values of SRS resources may be directly determined based on a quantity of indicated subbands. In this embodiment of this application, the terminal device may send the PUSCH to different network devices in different subbands by using different SRS resources and different power control parameters, to improve performance of PUSCH transmission. Index values of different SRS resources and power control parameters may adapt to transmission paths to different network devices, thereby improving performance of PUSCH transmission in different subbands.

In a possible design, the index values of the p SRS resources respectively fall into at least two SRS resource index value groups, and index values of SRS resources belonging to a same SRS resource index value group correspond to a same power control parameter.

In a possible design, the N subbands may be replaced with N time domain resources, for example, N OFDM symbol groups or N slots.

In a possible design, when the n index values of the p SRS resources correspond to N time domain resources, that a network device indicates sounding reference signal indication information that is used by a terminal device to send a PUSCH includes: The network device sends third indication information. The third indication information is used to indicate a quantity N of repetitions of the PUSCH to be sent by the terminal device in time domain, N is a positive integer and N is greater than or equal to n, and each repetition in time domain is used to transmit a same transport block TB, and uses one of the p SRS resources.

Optionally, the third indication information may further indicate an index value of an SRS resource used to send the PUSCH each time.

In this embodiment of this application, index values of different SRS resources may adapt to transmission paths to different network devices, and then corresponding power control parameters are used, to improve performance of repeated PUSCH transmissions in different time domains. For example, PUSCHs in different time domains may be separately received by different network devices and soft combination processing is performed, to obtain a diversity gain.

In a possible design, that a network device indicates sounding reference signal indication information that is used by a terminal device to send a PUSCH includes: The network device sends fourth indication information. The fourth indication information is used to indicate a transmission manner used by the PUSCH. In different transmission manners, power control parameters corresponding to the index value of the SRS resource are different. The different transmission manners include: a wideband precoding manner and a subband precoding manner; or a time domain repeated transmission manner and a non-time domain repeated transmission manner.

In a possible design, the power control parameter includes at least one of the following power control parameters: an open-loop power control parameter, a closed-loop power control parameter, a target value of transmit power, an offset of transmit power, a path loss measurement reference signal index value, and a transmit power adjustment amount.

According to a fifth aspect, an embodiment of this application further provides a communication method. The method includes: A terminal device determines, based on a transmission resource corresponding to detected fifth indication information, a power control parameter of a PUSCH scheduled by the fifth indication information. Different transmission resources correspond to different power control parameters, and the power control parameter is used to determine transmit power of the PUSCH. The terminal device sends the PUSCH based on the power control parameter.

According to the method provided in this embodiment of this application, in a communication process, based on the transmission resource used when a network device sends the fifth indication information, the terminal device may determine the power control parameter of the transmission resource, and send the PUSCH based on the power control parameter. Different network devices may independently schedule PUSCH resources, and the scheduled PUSCH resources respectively correspond to different power control parameters. The terminal device may adapt independent transmission paths based on power control parameters respectively corresponding to different network devices, to improve transmission performance. In addition, in the method in this embodiment of this application, the terminal device may directly determine, based on a physical resource on which the scheduling signaling is located, the power control parameter of the PUSCH scheduled by the scheduling parameter, so that a quantity of DCI bits does not need to be increased.

In a possible design, the transmission resource includes a control resource set CORESET or a CORESET group. Each CORESET group includes one or more CORESETs.

In a possible design, different CORESET groups are associated with different power control parameters, and a power control parameter used by a PUSCH scheduled by DCI is a power control parameter associated with a CORESET group in which the DCI is located.

In a possible design, the power control parameter includes at least one of the following power control parameters: an open-loop power control parameter, a closed-loop power control parameter, a target value of transmit power, an offset of transmit power, a path loss measurement reference signal index value, and a transmit power adjustment amount.

According to a sixth aspect, an embodiment of this application further provides a communication method. The method includes: A network device sends fifth indication information on a transmission resource. Different transmission resources correspond to different power control parameters. The network device receives a physical uplink shared channel PUSCH. The PUSCH is sent by a terminal device based on a power control parameter of the PUSCH.

According to the method provided in this embodiment of this application, in a communication process, the network device sends the fifth indication information by using the transmission resource, and based on the transmission resource used when the fifth indication information is sent, the terminal device may determine the power control parameter of the transmission resource, and send the PUSCH based on the power control parameter. Different network devices may independently schedule PUSCH resources, and the scheduled PUSCH resources respectively correspond to different power control parameters. The terminal device may adapt independent transmission paths based on power control parameters respectively corresponding to different network devices, to improve transmission performance. In addition, in the method in this embodiment of this application, DCI signaling does not need to include a field specifically used to indicate power control parameter selection, thereby avoiding a problem of an uplink resource waste and a problem of increasing a quantity of DCI bits that are caused by additionally configuring an SRS resource by the network device.

In a possible design, the transmission includes a CORESET or a CORESET group. Each CORESET group includes one or more CORESETs.

In a possible design, different CORESET groups are associated with different power control parameters, and a power control parameter used by a PUSCH scheduled by DCI is a power control parameter associated with a CORESET group in which the DCI is located.

In a possible design, the power control parameter includes at least one of the following power control parameters: an open-loop power control parameter, a closed-loop power control parameter, a target value of transmit power, an offset of transmit power, a path loss measurement reference signal index value, and a transmit power adjustment amount.

According to a seventh aspect, an embodiment of this application further provides a communication apparatus. The apparatus includes a memory, a processor, and a communication interface. The memory is configured to store computer instructions. The communication interface is configured to communicate with another communication apparatus. The processor is separately connected to the memory and the communication interface, and is configured to execute the computer instructions, to perform the method in any one of the first to sixth aspects and the optional implementations.

In a possible design, the apparatus includes one or more processors and a communication unit. The one or more processors are configured to support the apparatus in performing a corresponding function of the terminal device or the network device in the foregoing method, for example, determining a power control parameter of a PUSCH based on precoding indication information used by the PUSCH. The communication unit is configured to support the apparatus in communicating with another device, to implement a receiving and/or sending function.

Optionally, the apparatus may further include one or more memories. The memory is coupled to the processor, and configured to store program instructions and/or data necessary for the network device. The one or more memories may be integrated with the processor, or may be disposed independent of the processor. This is not limited in this application.

The apparatus may be a terminal device, a base station, a gNB, a TRP, or the like. The communication unit may be a transceiver or a transceiver circuit. Optionally, the transceiver may alternatively be an input/output circuit or interface.

The apparatus may alternatively be a communication chip. The communication unit may be an input/output circuit or interface of the communication chip.

In another possible design, the apparatus includes a transceiver, a processor, and a memory. The processor is configured to control the transceiver to receive and send signals, the memory is configured to store a computer program, and the processor is configured to run the computer program in the memory, to enable the apparatus to perform the method completed by the terminal device or the network device in any possible implementation of the foregoing aspects.

In a possible design, the apparatus includes one or more processors and a communication unit. The one or more processors are configured to support the apparatus in performing a corresponding function of the terminal device in the foregoing method, for example, determining a power control parameter of a PUSCH based on precoding indication information used by the PUSCH. The communication unit is configured to support the apparatus in communicating with another device, to implement a receiving and/or sending function, for example, sending the PUSCH.

Optionally, the apparatus may further include one or more memories. The memory is coupled to the processor, and configured to store program instructions and/or data necessary for the apparatus. The one or more memories may be integrated with the processor, or may be disposed independent of the processor. This is not limited in this application.

The apparatus may be an intelligent terminal, a wearable device, or the like. The communication unit may be a transceiver or a transceiver circuit. Optionally, the transceiver may alternatively be an input/output circuit or interface.

The apparatus may alternatively be a communication chip. The communication unit may be an input/output circuit or interface of the communication chip.

In another possible design, the apparatus includes a transceiver, a processor, and a memory. The processor is configured to control the transceiver to receive and send signals, the memory is configured to store a computer program, and the processor is configured to run the computer program in the memory, to enable the apparatus to perform the method completed by the terminal device or the network device in any possible implementation of the foregoing aspects.

According to an eighth aspect, an embodiment of this application further provides a communication system. The system includes the terminal device and the network device.

According to a ninth aspect, a computer-readable storage medium is provided, configured to store a computer program. The computer program includes instructions used to perform the method in any possible implementation of the foregoing aspects.

According to a tenth aspect, a computer program product is provided. The computer program product includes computer program code, and when the computer program code runs on a computer, the computer is enabled to perform the method in any possible implementation of the foregoing aspects.

According to an eleventh aspect, a chip is provided. The chip is coupled to a memory, and configured to read and execute program instructions stored in the memory, to perform the method in any possible implementation of the foregoing aspects.

According to a twelfth aspect, a chip system is provided. The chip system includes a transceiver, configured to implement functions of the network device or the terminal device in the methods in the foregoing aspects, for example, receive or send data and/or information in the methods.

In a possible design, the chip system further includes a memory, and the memory is configured to store program instructions and/or data. The chip system may include a chip, or may include a chip and another discrete component.

## BRIEF DESCRIPTION OF DRAWINGS

FIG. 1 is a schematic diagram of an architecture of a communication system according to an embodiment of this application;

FIG. 2 is a schematic flowchart of a communication method according to an embodiment of this application;

FIG. 3 is a schematic diagram of an architecture of a communication system according to an embodiment of this application;

FIG. 4 is a schematic diagram of an architecture of another communication system according to an embodiment of this application;

FIG. 5 is a schematic flowchart of a communication method according to an embodiment of this application;

FIG. 6 is a schematic diagram of an architecture of a communication system according to an embodiment of this application;

FIG. 7 is a schematic flowchart of a communication method according to an embodiment of this application;

FIG. 8 is a schematic diagram of a structure of a terminal device according to an embodiment of this application;

FIG. 9 is a schematic diagram of a structure of a network device according to an embodiment of this application; and

FIG. 10 is a schematic diagram of a structure of a communication apparatus according to an embodiment of this application.

## DESCRIPTION OF EMBODIMENTS

The following further describes in detail the present invention with reference to the accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may also be used.

In addition, the word "example" in embodiments of this application is used to represent giving an example, an illustration, or a description. Any embodiment or design scheme described as an "example" in this application should not be explained as being more preferred or having more advantages than another embodiment or design scheme. Exactly, use of the word "example" is intended to present a concept in a specific manner.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in embodiments of this application are also applicable to resolving similar technical problems.

The following describes some terms in embodiments of this application, to facilitate understanding of a person skilled in the art.

(1) A terminal device may be a device with a wireless transceiver function, and may also be referred to as a terminal. The terminal device may be deployed on land, including indoor, outdoor, handheld, or vehicle-mounted forms, or may be deployed on a water surface (such as a ship), or may be deployed in air (for example, on an airplane, a balloon, or a satellite). The terminal device may be user equipment (user equipment, UE). The UE includes a handheld device, a vehicle-mounted device, a wearable device, or a computing device with a wireless communication function. For example, the UE may be a mobile phone (mobile phone), a tablet computer, or a computer with a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal device may be the terminal device, or may be an apparatus that can support the terminal device in implementing the function, for example, a chip system. The apparatus may be installed in the terminal device or used in cooperation with the terminal device. In embodiments of this application, the chip system may include a chip, or may include a chip and another discrete component. In embodiments of this application, an example in which an apparatus for implementing a function of the terminal device is the terminal device may be used for description.

In embodiments of this application, the terminal device may be configured to receive a downlink signal and/or send an uplink signal.

(2) A network device may be a device deployed in a radio access network and capable of performing wireless communication with a terminal device. The network device may be a base station (base station, BS). The base station may have a plurality of forms, such as a macro base station, a micro base station, a relay station, and an access point. For example, the base station in embodiments of this application may be a base station in 5G or a base station in LTE. The base station in 5G may also be referred to as a transmission reception point (transmission reception point, TRP) or a gNB. In embodiments of this application, an apparatus configured to implement a function of the network device may be the network device, or may be an apparatus that can support the network device in implementing the function, for example, a chip system. The apparatus may be installed in the network device or used in cooperation with the network device. In embodiments of this application, an example in which an apparatus for implementing a function of the network device is the network device may be used for description.

In embodiments of this application, the network device may include a scheduling device and a sending device. The scheduling device includes but is not limited to an eNB and/or a gNB, an operator network device, or the like, configured to configure uplink and downlink resources, and/or generate downlink control information (downlink control information, DCI) in a scheduling mode. The sending device includes but is not limited to a TRP or a remote radio head (remote radio head, RRH), configured to send a downlink signal and receive an uplink signal. The downlink signal includes a PDCCH, a PDSCH, and the like. The uplink signal includes a PUCCH, a PUSCH, and the like.

(3) Uplink transmit power control may also be referred to as uplink power control, or may be referred to as power control for short, which is performed so that a network device receives an uplink signal at proper receive power. The uplink signal is a signal transmitted by a terminal device through an uplink physical channel. For example, the proper receive power means receive power required when the uplink signal is correctly decoded by the network device, and means that uplink transmit power of the uplink signal cannot be unnecessarily too high to cause interference to other uplink transmission. Generally, the network device indicates, by indicating a power control parameter, power used by the terminal device to send the uplink signal.

For example, the power control parameter includes at least one of the following power control parameters: an open-loop power control parameter (meaning that the network device configures a transmit power value of the terminal device based on a long-term observation result, or further determines the transmit power value based on a measured value of the terminal device), a closed-loop power control parameter (meaning that the network device determines a transmit power value based on an instantaneous measurement result), a target value of transmit power, an offset of transmit power, a path loss measurement reference signal index value, or a transmit power adjustment amount.

Power control on a physical uplink shared channel (physical uplink shared channel, PUSCH) is used as an example. If the terminal device sends the PUSCH to the network device on an uplink activated bandwidth part (bandwidth part, BWP) *b* on a carrier *f* of a serving cell (serving cell) *c*, uplink transmit power of the PUSCH in a transmission occasion *i* may be calculated based on the following method:

$$P_{\text{PUSCH},b,f,c}(i,j,q_d,l) = \min \left\{ \begin{array}{l} P_{\text{CMAX},f,c}(i), \\ P_{\text{O\_PUSCH},b,f,c}(j) + 10\log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{array} \right\}$$

[dBm].

$P_{\text{PUSCH},b,f,c}(i, j, q_d, l)$ is the uplink transmit power of the PUSCH in the transmission occasion *i*,

$$P_{\mathrm{O\_PUSCH},b,f,c}(j)+10\log_{10}(2^{\mu}\cdot M_{\mathrm{RB},b,f,c}^{\mathrm{PUSCH}}(i))+\alpha_{b,f,c}(j)\cdot PL_{b,f,c}(q_d)+\Delta_{\mathrm{TF},b,f,c}(i)$$ may be considered as an open-loop power control parameter, and $f_{b,f,c}(i, l)$ may be considered as a closed-loop power control parameter.

$P_{\mathrm{CMAX},f,c}(i)$ is maximum PUSCH transmit power configured for the terminal device on the carrier $f$ of the cell $c$.

$P_{\mathrm{O\_PUSCH},b,f,c}(j)$ and $\alpha_{b,f,c}$ may be collectively referred to as target (expected) receive power, $j \in \{0, 1, ..., J - 1\}$, and a value of the parameter may be indicated or configured for the terminal device by the network device by using signaling (for example, radio resource control (radio resource control, RRC) signaling, a system message, or DCI). The network device may configure, for the terminal device, a plurality of parameter sets (sets) used to indicate $P_{\mathrm{O}}$ (which may be considered as a target value of the transmit power) and $\alpha$ (which may be considered as an offset of the transmit power). The terminal device may determine, based on a current transmission mode (the transmission mode includes initial access transmission, DCI-based data scheduling transmission, RCC-based data scheduling transmission, and the like) and an indication of an SRI field (if any), a number $j$ of a parameter set used to transmit the PUSCH, and determine, based on the number $j$ of the parameter set, $P_{\mathrm{O}}$ and $\alpha$ that are used to transmit the PUSCH. For example, the network device may configure each parameter set for the terminal device by using RRC signaling, and each parameter set includes an identifier (also referred to as an index, a number, or the like) $j$ of the parameter set, and values of $P_{\mathrm{O}}$ and $\alpha$.

When a plurality of parameter sets are configured, and DCI for scheduling the PUSCH includes an SRI field, the terminal device may determine, based on a mapping relationship between an SRI and a parameter set, a parameter set that is indicated by the SRI field in the DCI and that is used to send the PUSCH. For example, the mapping relationship between an SRI and a parameter set may be configured by using RRC signaling. The SRI field is used to select a transmit beam of the PUSCH, which is reflected as follows: When the network device configures a plurality of sounding reference signal (sounding reference signal, SRS) resources, during scheduling of the PUSCH, one or more SRS resources (indicated by the SRI field) need to be selected to represent a transmit beam of the PUSCH. In this way, different values are indicated by using the SRI field to indicate different parameter sets, so that different transmit beams of the PUSCH may use independent parameter sets to improve transmission performance. For example, as shown in Table 1, an SRI indicates a selected SRS resource number. A quantity of SRS resource numbers in Table 1 indicates a quantity of layers used for PUSCH transmission. SRS resource numbers indicated by different SRIs are different, and values of $P_{\mathrm{O}}$ and $\alpha$ in corresponding parameter sets are also different. In Table 1, Bit field mapped to index represents a value of the SRI field, $N_{\mathrm{SRS}}$ represents an SRS resource quantity (or a quantity of SRS resource numbers), and reserved represents a reserved bit.

Table 1

| Bit field mapped to index | SRS resource quantity $N_{\mathrm{SRS}}$ = 2 | Bit field mapped to index | SRS resource quantity $N_{\mathrm{SRS}}$ = 3 | Bit field mapped to index | SRS resource quantity $N_{\mathrm{SRS}}$ = 4 |
|---|---|---|---|---|---|
| 0 | SRS resource 0 | 0 | SRS resource 0 | 0 | SRS resource 0 |
| 1 | SRS resource 1 | 1 | SRS resource 1 | 1 | SRS resource 1 |
| 2 | SRS resources 0 and 1 | 2 | SRS resource 2 | 2 | SRS resource 2 |
| 3 | Reserved | 3 | SRS resources 0 and 1 | 3 | SRS resource 3 |
| | | 4 | SRS resources 0 and 2 | 4 | SRS resources 0 and 1 |
| | | 5 | SRS resources 1 and 2 | 5 | SRS resources 0 and 2 |
| | | 6 | SRS resources 0, 1, and 2 | 6 | SRS resources 0 and 3 |
| | | 7 | Reserved | 7 | SRS resources 1 and 2 |
| | | | | 8 | SRS resources 1 and 3 |
| | | | | 9 | SRS resources 2 and 3 |

(continued)

| Bit field mapped to index | SRS resource quantity $N_{SRS}$ = 2 | Bit field mapped to index | SRS resource quantity $N_{SRS}$ = 3 | Bit field mapped to index | SRS resource quantity $N_{SRS}$ = 4 |
|---|---|---|---|---|---|
| | | | | 10 | SRS resources 0, 1, and 2 |
| | | | | 11 | SRS resources 0, 1, and 3 |
| | | | | 12 | SRS resources 0, 2, and 3 |
| | | | | 13 | SRS resources 1, 2, and 3 |
| | | | | 14 | SRS resources 0, 1, 2, and 3 |
| | | | | 15 | Reserved |

When a plurality of parameter sets are configured, and DCI for scheduling the PUSCH does not include an SRI field, or when DCI for scheduling the PUSCH is in a simplified DCI format, a number of a default parameter set is $j$=2, and the terminal device may determine, based on a parameter set corresponding to the first parameter set number, values of $P_O$ and $\alpha$ that are used to transmit the PUSCH.

$\alpha_{b,f,c}(j)$ is a partial path loss compensation factor within a range of (0, 1], and a value of the parameter may be indicated or configured for the terminal device by the network device by using signaling (for example, RRC signaling, a system message, or DCI). $M_{RB,b,f,c}^{PUSCH}(i)$ is a quantity of resource blocks (resource block, RB) to which the PUSCH is mapped, a quantity of RBs used to send the PUSCH, or a quantity of RBs occupied to send the PUSCH, and a value of the parameter may be indicated or configured for the terminal device by the network device by using signaling (for example, RRC signaling or DCI).

$\mu$ is a subcarrier spacing configuration of the PUSCH. For example, subcarrier spacings corresponding to different values of $\mu$ are shown in Table 2.

**Table** 2

| $\mu$ | $\Delta f = 2^{\mu} \cdot 15$ [kHz] |
|---|---|
| 0 | 15 |
| 1 | 30 |
| 2 | 60 |
| 3 | 120 |
| 4 | 240 |

$PL_{b,f,c}(q_d)$ is an estimated path loss value for path loss compensation, and a value of the parameter may be a path loss estimated by the terminal device based on a reference signal index value (or a downlink reference signal) $q_d$. When a plurality of path loss reference signal index values $q_d$ are configured, the network device may further configure a mapping relationship between the plurality of reference signal index values $q_d$ (which may also be referred to as path loss measurement reference signal index values) and values of the SRI field, and the terminal device may determine, based on a value of the SRI field, which reference signal index value $q_d$ (or reference signal corresponding to the reference signal index value) is used to determine the estimated path loss value of the PUSCH. When DCI for scheduling the PUSCH is in the simplified DCI format (which may also be referred to as a compact DCI format), and physical uplink control channel (physical uplink control channel, PUCCH) resource configuration information includes beam indication information, the terminal device may determine the estimated path loss value of the PUSCH based on a minimum reference signal index value $q_d$ in the PUCCH resource configuration information that includes the beam indication information. When DCI for scheduling the PUSCH is in the simplified DCI format, and PUCCH resource configuration information does not include beam indication information, or the DCI for scheduling the PUSCH does not include an SRI field, the terminal device may determine the estimated path loss value of the PUSCH based on a plurality of configured reference signal index values $q_d$.

$\Delta_{TFb,f,c}(i)$ is a parameter value related to a modulation method and a code rate of channel coding of PUSCH transmission, for example, may be related to a type of information (for example, including uplink shared channel (UL-SCH) data information or channel state information (channel state information, CSI)) carried on the PUSCH, and a location or a quantity of physical resources occupied by the PUSCH.

$f_{b,f,c}(i,l)$ is a power adjustment value determined based on a transmit power control (transmit power control, TPC) command in a closed-loop power control process $l$, and $l$ may also be understood as a power control adjustment state index value. The DCI sent by the network device may carry a TPC field, and the TPC field is used to indicate a parameter value of $\delta_{PUSCH,b,f,c}$ (for example, a transmit power adjustment amount $\delta_{PUSCH,b,f,c}$). The terminal device may determine a value of $f_{b,f,c}(i,l)$ based on the value of $\delta_{PUSCH,b,f,c}$. For example, refer to Table 3. TPC Command Field represents a value of the TPC field, Accumulated $\delta_{PUSCH,b,f,c}$ indicates that ($\delta_{PUSCH,b,f,c}(i,l)$ is an accumulated value, and Absolute ($\delta_{PUSCH,b,f,c}$ indicates that ($\delta_{PUSCH,b,f,c}(i,l)$ is an absolute value.

**Table 3**

| TPC Command Field | Accumulated $\delta_{PUSCH,b,f,c}$ [dB] | Absolute $\delta_{PUSCH,b,f,c}$ [dB] |
|---|---|---|
| 0 | -1 | -4 |
| 1 | 0 | -1 |
| 2 | 1 | 1 |
| 3 | 3 | 4 |

When DCI for scheduling the PUSCH is in a terminal device-specific (UE-specific) DCI format, only the configured specific terminal device detects the DCI for scheduling the PUSCH, and determines, based on a mapping relationship between a value of an SRI field in the DCI for scheduling the PUSCH and the power control adjustment state index value $l$, $\delta_{PUSCH,b,f,c}(i,l)$ corresponding to the PUSCH. When DCI for scheduling the PUSCH is in a common (common) DCI format, the DCI for scheduling the PUSCH carries a power control adjustment state index value $l$ whose value is 0 or 1, and the terminal device accumulates only TPC indications with a same value of $l$ based on a value of an SRI field. When DCI for scheduling the PUSCH is in the simplified DCI format, or the DCI for scheduling the PUSCH does not include an SRI field, the power control adjustment state index value is $l=0$.

When $\delta_{PUSCH,b,f,c}$ is an accumulated value,
$$f_{b,f,c}(i,l) = f_{b,f,c}(i-i_0,l) + \sum_{m=0}^{\ell(D_i)-1} \delta_{PUSCH,b,f,c}(m,l)$$

$$\sum_{m=0}^{\ell(D_i)-1} \delta_{PUSCH,b,f,c}(m,l)$$
indicates that $\delta_{PUSCH,b,f,c}$ indicated by all TPC signaling received within a period of time before the transmission occasion $i$ are accumulated. When a value of an SRI field received by the network device is associated with the power control adjustment state index value $l$, the terminal device resets $f_{b,f,c}(k,l)=0$, k=0,1,...,$i$. When $\delta_{PUSCH,b,f,c}$ is an absolute value, $f_{b,f,c}(i,l) = \delta_{PUSCH,b,f,c}(i,l)$.

Embodiments of this application are described below in detail with reference to accompanying drawings. In addition, it should be understood that, in embodiments of this application, at least one may alternatively be described as one or more, and a plurality of may be two, three, four, or more. This is not limited in this application.

In embodiments of this application, "/" may represent an "OR" relationship between associated objects, for example, A/B may represent A or B; "and/or" may be used to describe three relationships between associated objects, for example, A and/or B may represent three cases: A exists alone, both A and B exist, and B exists alone, where A and B may be singular or plural. For ease of describing technical solutions in embodiments of this application, in the embodiments of this application, words such as "first" and "second" may be used to distinguish technical features having same or similar functions. Terms such as "first" and "second" do not limit a quantity and an execution sequence, and the terms such as "first" and "second" do not indicate a definite difference. In embodiments of this application, a word such as "example" or "for example" is used to represent giving an example, an illustration, or a description. An embodiment or design described as "example" or "for example" should not be explained as being more preferred or advantageous over other embodiments or designs. Use of the word such as "example" or "for example" is intended to present a related concept in a specific manner, to facilitate understanding.

In addition, in embodiments of this application, "of", "corresponding", and "relevant" may be used interchangeably sometimes. It should be noted that they mean the same when a difference between them is not emphasized.

The technical solutions in the embodiments of this application may be applied to various communication systems, for example, a fourth generation (4th Generation, 4G) system including a long term evolution (long term evolution, LTE) system, a worldwide interoperability for microwave access (worldwide interoperability for microwave access, WiMAX) communication system, a future fifth generation (5th Generation, 5G) system such as a new radio access technology (new radio access technology, NR) system, and a future communication system such as a 6G system, provided that the communication system can implement signal transmission. The technical solutions in the embodiments of this application may be applied to a low frequency (less than 6 GHz) scenario, and may also be applied to a high frequency (greater than 6 GHz) scenario. The technical solutions in the embodiments of this application are also applicable to a homogeneous network scenario and a heterogeneous network scenario, and are also applicable to a frequency division duplex (frequency division multiplexing, FDD) and a time division duplex (time division duplexing, TDD) system. The technical solutions in this embodiment of this application are also applicable to a scenario of a single transmission reception point (Single-TRP), a multi-transmission reception point (Multi-TRP), or a derivative scenario of a single-TRP and a multi-TRP. In addition, a type and a quantity of network devices are not limited in embodiments of this application, for example, multi-point coordinated transmission between macro base stations, between micro base stations, and between a macro base station and a micro base station.

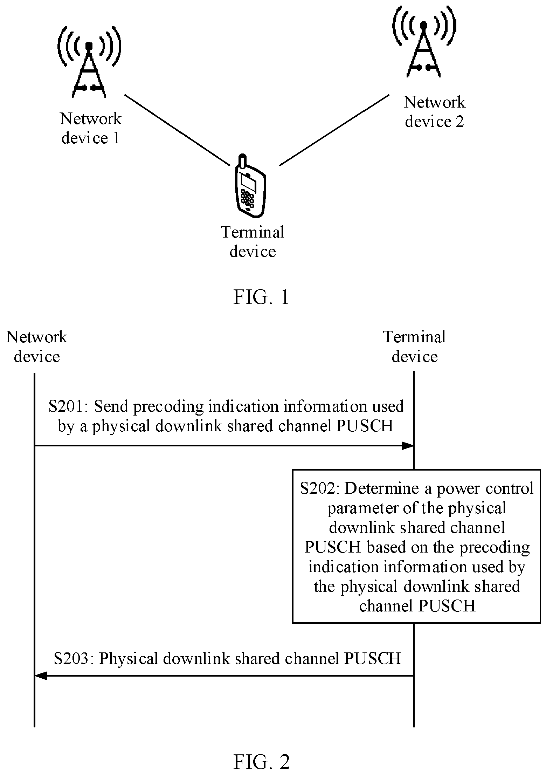

For example, a communication system shown in FIG. 1 may be used. The communication system includes a network device (including a network device 1 and a network device 2) and a terminal device. In the communication system, the network device 1 may configure uplink and downlink resources, send a downlink signal, and receive an uplink signal, and the terminal device may receive a downlink signal and/or send an uplink signal.

A plurality of network devices may coordinately receive and process a PUSCH, to improve reliability of PUSCH transmission. As shown in FIG. 1, the two network devices coordinately receive and process a PUSCH, one of the network devices sends DCI for scheduling the PUSCH, and both of the two network devices may receive the PUSCH at an RB location indicated by the DCI. The PUSCH may be sent in a frequency selective manner and/or a time domain repetition manner.

If the PUSCH is sent in the frequency selective manner, for example, in all RB locations occupied by the PUSCH, some RBs use a precoding manner 1, and some RBs use a precoding manner 2, for example, the precoding manner 1 facilitates reception by the network device 1, and the precoding manner 2 facilitates reception by the network device 2, the network device may notify the terminal device to divide all RBs occupied by the PUSCH into a plurality of subbands (which may also be referred to as RB sets) when sending the PUSCH. Each subband corresponds to a different precoding manner. The precoding manner means using different transmit beams (corresponding to an analog precoding mechanism, where the terminal device may change a transmit beam by changing a phase of a phase shifter), antenna ports, or antenna virtualization manners (corresponding to a digital precoding mechanism, where the terminal device may generate different transmit beams by using digital weights between different antennas). For the terminal device, different subbands use different transmit beams. For example, an RB set 0 corresponds to SRI=0, and an RB set 1 corresponds to SRI=1, and PUSCH transmission on different RB sets may use independent power control parameters. That is, the terminal device may determine, based on a mapping relationship between an SRI and a power control parameter, a transmit power value used by a PUSCH on an RB set.

If the PUSCH is sent in the time domain repetition manner, a same transport block (transport block, TB) is repeatedly sent for the PUSCH at different times in different precoding manners. The network device may notify the terminal device of a quantity of repetitions of the PUSCH to be sent in time domain (which may also be referred to as symbol sets), and may further notify the terminal device of a precoding manner used for each repeated transmission. For example, the PUSCH is repeatedly sent twice, the first sending uses the precoding manner 1 to facilitate reception by the network device 1, and the second repeated sending uses the precoding manner 2 to facilitate reception by the network device 2. For the terminal device, different repetitions in time domain use different transmit beams. For example, a symbol set 0 corresponds to SRI=0, and a symbol set 1 corresponds to SRI=1, and PUSCH transmission on different symbol sets may use independent power control parameters. That is, the terminal device may determine, based on a mapping relationship between an SRI and a power control parameter, transmit power values used by the PUSCH at different times (symbol sets).

When a plurality of network devices coordinately receive and process the PUSCH, the terminal device can determine transmit power and a precoding manner of the PUSCH only by using a unified set of power control parameters. However, transmission paths for transmitting the PUSCH to different network devices are independent, and the unified set of power control parameters and a same precoding manner cannot adapt to two transmission paths at the same time, affecting performance of PUSCH transmission.

The precoding manner may be understood as beamforming (beamforming), that is, when a transmit end has a plurality of transmit antennas, amplitude or phase weighting is performed between the transmit antennas when a same signal is sent, so that a directional beam is formed in transmission space for the sent signal, thereby improving transmission efficiency.

In view of this, to ensure performance of PUSCH transmission, this application provides a communication method. In the method, a terminal device may determine a power control parameter of a to-be-sent PUSCH based on precoding indication information, and send the PUSCH based on the power control parameter. The precoding indication information is used to indicate n transmitted precoding matrix indicators (transmitted precoding matrix indicator, TPMI), and at least two of the n TPMIs respectively correspond to different power control parameters. In this way, the terminal device may implement PUSCH transmission by using an adapted power control parameter, to improve transmission performance. Alternatively, the terminal device may determine a power control parameter of a to-be-sent PUSCH based on sounding reference signal indication information, and send the PUSCH based on the power control parameter. The sounding reference signal indication information is used to indicate index values of p SRS resources, and at least two of the index values of the p SRS resources correspond to different power control parameters. In this way, in a PUSCH transmission process, index values of different SRS resources may adapt to transmission paths to different network devices, and then corresponding power control parameters are used, to improve transmission performance. Alternatively, the terminal device may send, based on a transmission resource corresponding to detected fifth indication information of a network device, a PUSCH by using a power control parameter corresponding to the transmission resource. In this way, PUSCH transmission does not depend on an SRI, different network devices may independently schedule PUSCH resources, and the scheduled PUSCH resources respectively correspond to different power control parameters. The terminal device may adapt independent transmission paths based on power control parameters respectively corresponding to different network devices, to improve transmission performance.

The communication method provided in the embodiments of this application may be applied to the communication system shown in FIG. 1, and is described below with reference to specific embodiments.

[Manner 1]

In this manner, a terminal device determines a power control parameter of a to-be-sent PUSCH based on precoding indication information. FIG. 2 is a schematic diagram of a communication process based on Manner 1. The process includes the following steps.

S201. A network device indicates precoding indication information that is used by a terminal device to send a PUSCH.

The precoding indication information is used to indicate n TPMIs, and n is a positive integer. In this way, the network device may indicate the n TPMIs at a time, to reduce redundancy in indicating the TPMIs and reduce overheads for indicating the TPMIs. For example, the network device may add, to first signaling, a field used to indicate the n TPMIs. Optionally, the first signaling may be DCI, may be RRC signaling, or may be other signaling or the like. The other signaling may be other existing signaling (non-DCI and RCC signaling), may be signaling obtained by improving existing signaling, or may be newly added signaling or the like.

In an implementation, the first signaling carries n fields used to indicate a TPMI, and each field is used to indicate a corresponding TPMI. For example, the PUSCH uses two transmit beams, and the first signaling carries two fields used to indicate a TPMI. One of the fields is used to indicate a TPMI 0, and the other field is used to indicate a TPMI 1.

In another implementation, the first signaling may carry one field used to indicate a TPMI, the field is used to indicate a first TPMI, and a remaining TPMI may be determined based on the first TPMI. For example, the first signaling carries one field used to indicate a TPMI, and the field is used to indicate a TPMI 0. The terminal device may select another TPMI that has a same coherence type as the TPMI 0 and that is different from the TPMI 0. For example, the PUSCH uses two transmit beams, and the terminal device may search for another TPMI other than the TPMI 0 by using a predefined polling mechanism, and determine the another TPMI as a TPMI 1.

In still another implementation, a field that is in the first signaling and that is used to indicate a TPMI directly indicates the n TPMIs. In the field, n TPMIs indicated by each state are predefined or preconfigured. For example, the PUSCH uses two transmit beams, the first signaling carries one field used to indicate a TPMI, and one state in the field is used to indicate a TPMI 0 and a TPMI 1.

In the foregoing implementation, each field used to indicate a TPMI corresponds to a different time-frequency resource. For example, a physical time-frequency resource corresponding to each TPMI corresponds to a set of power control parameters. Specifically, each field used to indicate a TPMI corresponds to a different subband, or each field used to indicate a TPMI corresponds to a different OFDM symbol, sub-slot, or slot.

Each TPMI corresponds to a set of power control parameters, and at least two of the n TPMIs respectively correspond to different power control parameters. For example, each of the n TPMIs corresponds to a different power control parameter. Each TPMI corresponds to some time-frequency resources occupied by the PUSCH. A precoding manner includes at least one of an antenna port used by the terminal device to send the PUSCH, a transmit beam used by the terminal device to send the PUSCH, an antenna beamforming manner used by the terminal device to send the PUSCH, or the like. The beamforming manner may be performing amplitude/phase weighting between a plurality of transmit antennas. In this embodiment of this application, an example in which the precoding manner includes the antenna port used to send the PUSCH is used for description. Generally, each two of the antenna port used to send the PUSCH, the transmit beam used to send the PUSCH, and the antenna virtualization manner used to send the PUSCH may be converted to each other. Therefore, based on one known of the three, the other two may be determined.

Optionally, each TPMI corresponds to a matrix (also referred to as a precoding matrix), a row of the matrix corresponds to a transmit antenna port for sending the PUSCH, a column of the matrix corresponds to a transport layer of the PUSCH, and a quantity of rows in the matrix is greater than or equal to a quantity of columns in the matrix. For example, for the matrix corresponding to each TPMI, refer to the following Table 4, Table 5.1, or Table 5.2.

Optionally, the transmit antenna port may be represented by using an SRS port, that is, the transmit antenna port is in a one-to-one correspondence with the SRS port.

The n TPMIs have a same coherence type, and the coherence type includes a non-coherent type, a partially coherent type, or a fully coherent type. For the non-coherent type, each column of the precoding matrix has only one non-zero element. For the partially coherent type, each column of the precoding matrix has K1 non-zero elements, 1<K1<Q, and Q is a quantity of rows of the precoding matrix. For the partially coherent type, each column of the precoding matrix has non-zero elements only in some rows, the some rows correspond to coherent antenna ports, and a remaining row is a non-coherent antenna port with respect to the some rows. For the fully coherent type, all elements of each column of the precoding matrix are non-zero elements.

Optionally, that the n TPMIs have a same coherence type means that different time-frequency resources belong to a same coherence type although different precoding matrices are used.

Optionally, when the coherence type of the n TPMIs is the non-coherent type or the partially coherent type, at least two of the n TPMIs correspond to different power control parameters. That is, different antenna ports may correspond to different power control parameters.

Optionally, the coherence type of the n TPMIs is the fully coherent type, and the n TPMIs correspond to a same set of power control parameters. In other words, a plurality of TPMIs whose coherence types are the fully coherent type correspond to a same power control parameter.

Optionally, the n TPMIs respectively fall into at least two TPMI groups, and TPMIs belonging to a same TPMI group correspond to a same power control parameter. The network device may preset at least two TPMI groups, where each TPMI group corresponds to a set of power control parameters, and then assign each set TPMI to a corresponding TPMI group. Alternatively, the network device may preset the n TPMIs and the set of power control parameters corresponding to each TPMI, and then assign TPMIs with a same power control parameter to one TPMI group.

Optionally, when the n TPMIs belong to the non-coherent type, locations of non-zero elements of TPMIs in different TPMI groups are different. When the n TPMIs belong to the partially coherent type, locations of non-zero elements of TPMIs in different TPMI groups are different, and/or locations of non-zero elements of TPMIs in a same TPMI group are the same.

If the PUSCH is sent in a frequency selective precoding manner, the network device may indicate subband granularity related information used to send the PUSCH. The subband granularity related information includes a subband quantity N, a subband granularity K2, and/or the like. Optionally, the subband granularity related information may be carried in the first instruction, or may be carried in another instruction other than the first instruction. Subsequently, the terminal device may obtain subbands through division based on the subband granularity related information. For details, refer to the following S202.

Optionally, the subband quantity N is greater than 1, and the quantity n of the TPMIs is greater than 1.

In an implementation, the subband quantity N is preconfigured. For example, N is indicated by using RRC signaling or media access control (medium access control, MAC) control element (control element, CE) signaling.

In a possible design, the subband quantity N is determined based on scheduled bandwidth of the PUSCH. For example, different scheduled bandwidth corresponds different N, and the relationship may be predefined.

In a possible design, the subband quantity N is determined based on a quantity of the TPMIs, for example, the subband quantity N is equal to the quantity n of the TPMIs.

In a possible design, a quantity of RBs included in each subband is preconfigured, or determined based on the scheduled bandwidth of the PUSCH. The n TPMIs correspond to N subbands, each of the N subbands includes one or more continuous RBs, TPMIs used to send the PUSCH on the RBs included in each subband are the same, an RB occupied by the PUSCH includes the N subbands, n is less than or equal to N, and N is a positive integer.

For example, the network device may specifically add, to the first signaling, a TPMI corresponding to a subband (RB set).

In an implementation, the first signaling carries n fields used to indicate a TPMI, and each field is used to indicate a TPMI of a specific subband. In another implementation, the first signaling carries one TPMI field used to indicate a TPMI, the field is used to indicate a TPMI of a first subband (a specific subband), and a remaining TPMI may be determined based on the TPMI used to indicate the first subband. In still another implementation, the first signaling carries one field used to indicate a TPMI, and the field is used to indicate a TPMI of each of n specific subbands.

Specifically, it may be agreed that the n TPMIs sequentially correspond to the N subbands in descending or ascending order of frequencies.

A possible precoding indication (or antenna port indication) mechanism proposed in this embodiment of this application and configured codebooks are shown in the following Table 4, Table 5.1, and Table 5.2.

A codebook configured for a terminal device with two antenna ports is shown in Table 4. Each matrix in Table 4 is a codeword or corresponds to a TPMI. A row of the matrix corresponds to an antenna port through which the terminal device sends a PUSCH, and a column of the matrix corresponds to a transport layer of the PUSCH. Table 4 specifically represents a codebook of the antenna ports for transmission at one layer (rank=1). TPMI=0 and TPMI=1 indicate that the PUSCH is sent by using one antenna port of the terminal device. TPMI=2, TPMI=3, TPMI=4, and TPMI=5 (which are referred to as TPMI=2-5 for short for ease of description in this embodiment of this application) indicate that the PUSCH is sent by using the two antenna ports of the terminal device. TPMI=0 and TPMI=1 correspond to the non-coherent type, and TPMI=2-5 correspond to the coherent type.

**Table 4**

| TPMI index | $W$ (in ascending order from left to right) | | | | | | | |
|---|---|---|---|---|---|---|---|---|
| 0-5 | $\frac{1}{\sqrt{2}}\begin{bmatrix}1\\0\end{bmatrix}$ | $\frac{1}{\sqrt{2}}\begin{bmatrix}0\\1\end{bmatrix}$ | $\frac{1}{\sqrt{2}}\begin{bmatrix}1\\1\end{bmatrix}$ | $\frac{1}{\sqrt{2}}\begin{bmatrix}1\\-1\end{bmatrix}$ | $\frac{1}{\sqrt{2}}\begin{bmatrix}1\\j\end{bmatrix}$ | $\frac{1}{\sqrt{2}}\begin{bmatrix}1\\-j\end{bmatrix}$ | - | - |

Codebooks configured for a terminal device with four antenna ports are shown in Table 5.1 and Table 5.2. Each matrix in Table 5.1 and Table 5.2 is a codeword or corresponds to a TPMI. A row of the matrix corresponds to an antenna port through which the terminal device sends a PUSCH, and a column of the matrix corresponds to a transport layer of the PUSCH. Table 5.1 specifically represents a codebook of the antenna ports for transmission at one layer (rank=1). TPMI=0, TPMI=1, TPMI=2, and TPMI=3 (which are referred to as TPMI=0-3 for short for ease of description in this embodiment of this application) indicate that the PUSCH is sent by using one antenna port of the terminal device. TPMI=4, TPMI=5, TPMI=6, TPMI=7, TPMI=8, TPMI=9, TPMI=10, and TPMI=11 (which are referred to as TPMI=4-11 for short for ease of description in this embodiment of this application) indicate that the PUSCH is sent by using two antenna ports of the terminal, and a phase difference between the two antenna ports is determined based on values of elements in a matrix. TPMI=12, TPMI=13, TPMI=14, TPMI=15, and TPMI=16; TPMI=17, TPMI=18, TPMI=19, TPMI=20, TPMI=21, TPMI=22, TPMI=23, TPMI=24, TPMI=25, TPMI=26, and TPMI=27 (which are referred to as TPMI=12-27 for short for ease of description in this embodiment of this application) indicate that the PUSCH is sent by using the four antenna ports of the terminal, and phase differences between the four antenna ports are determined based on values of elements in a matrix. TPMI=0-3 correspond to the non-coherent type, TPMI=4-11 correspond to the partially coherent type, and TPMI=12-27 correspond to the coherent type.

**Table 5.1**

| TPMI index | $W$ (in ascending order from left to right) | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8-15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |
| 16-23 | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |

(continued)

| TPMI index | W (in ascending order from left to right) | | | | | | |
|---|---|---|---|---|---|---|---|
| 24-27 | $\dfrac{1}{2}\begin{bmatrix}1\\-j\\1\\-j\end{bmatrix}$ | $\dfrac{1}{2}\begin{bmatrix}1\\-j\\j\\1\end{bmatrix}$ | $\dfrac{1}{2}\begin{bmatrix}1\\-j\\-1\\j\end{bmatrix}$ | $\dfrac{1}{2}\begin{bmatrix}1\\-j\\-j\\-1\end{bmatrix}$ | | | |

Table 5.2 specifically represents a codebook of the antenna ports for transmission at two layers (rank=1). TPMI=0, TPMI=1, TPMI=2, TPMI=3, TPMI=4, and TPMI=5 (which are referred to as TPMI=0-5 for short for ease of description in this embodiment of this application) indicate that the PUSCH is sent by using one antenna port of the terminal device. TPMI=6, TPMI=7, TPMI=8, TPMI=9, TPMI=10, TPMI=11, TPMI=12, and TPMI=13 (which are referred to as TPMI=6-13 for short for ease of description in this embodiment of this application) indicate that the PUSCH is sent by using two antenna ports of the terminal device, and a phase difference between the two antenna ports is determined based on values of elements in a matrix. TPMI=14, TPMI=15, TPMI=16, TPMI=17, TPMI=18, TPMI=19, TPMI=20, and TPMI=21 (which are referred to as TPMI=14-21 for short for ease of description in this embodiment of this application) indicate that the PUSCH is sent by using four antenna ports of the terminal device, and phase differences between the four antenna ports are determined based on values of elements in a matrix. TPMI=0-5 correspond to the non-coherent type, TPMI=6-13 correspond to the partially coherent type, and TPMI=14-21 correspond to the coherent type.

**Table 5.2**

| TPMI index | W (in ascending order from left to right) | | | |
|---|---|---|---|---|
| 0-3 | $\dfrac{1}{2}\begin{bmatrix}1&0\\0&1\\0&0\\0&0\end{bmatrix}$ | $\dfrac{1}{2}\begin{bmatrix}1&0\\0&0\\0&1\\0&0\end{bmatrix}$ | $\dfrac{1}{2}\begin{bmatrix}1&0\\0&0\\0&0\\0&1\end{bmatrix}$ | $\dfrac{1}{2}\begin{bmatrix}0&0\\1&0\\0&1\\0&0\end{bmatrix}$ |
| 4-7 | $\dfrac{1}{2}\begin{bmatrix}0&0\\1&0\\0&0\\0&1\end{bmatrix}$ | $\dfrac{1}{2}\begin{bmatrix}0&0\\0&0\\1&0\\0&1\end{bmatrix}$ | $\dfrac{1}{2}\begin{bmatrix}1&0\\0&1\\1&0\\0&-j\end{bmatrix}$ | $\dfrac{1}{2}\begin{bmatrix}1&0\\0&1\\1&0\\0&j\end{bmatrix}$ |
| 8-11 | $\dfrac{1}{2}\begin{bmatrix}1&0\\0&1\\-j&0\\0&1\end{bmatrix}$ | $\dfrac{1}{2}\begin{bmatrix}1&0\\0&1\\-j&0\\0&-1\end{bmatrix}$ | $\dfrac{1}{2}\begin{bmatrix}1&0\\0&1\\-1&0\\0&-j\end{bmatrix}$ | $\dfrac{1}{2}\begin{bmatrix}1&0\\0&1\\-1&0\\0&j\end{bmatrix}$ |
| 12-15 | $\dfrac{1}{2}\begin{bmatrix}1&0\\0&1\\j&0\\0&1\end{bmatrix}$ | $\dfrac{1}{2}\begin{bmatrix}1&0\\0&1\\j&0\\0&-1\end{bmatrix}$ | $\dfrac{1}{2\sqrt{2}}\begin{bmatrix}1&1\\1&1\\1&-1\\1&-1\end{bmatrix}$ | $\dfrac{1}{2\sqrt{2}}\begin{bmatrix}1&1\\1&1\\j&-j\\j&-j\end{bmatrix}$ |
| 16-19 | $\dfrac{1}{2\sqrt{2}}\begin{bmatrix}1&1\\j&j\\1&-1\\j&-j\end{bmatrix}$ | $\dfrac{1}{2\sqrt{2}}\begin{bmatrix}1&1\\j&j\\j&-j\\-1&1\end{bmatrix}$ | $\dfrac{1}{2\sqrt{2}}\begin{bmatrix}1&1\\-1&-1\\1&-1\\-1&1\end{bmatrix}$ | $\dfrac{1}{2\sqrt{2}}\begin{bmatrix}1&1\\-1&-1\\j&-j\\-j&j\end{bmatrix}$ |

(continued)

| TPMI index | W (in ascending order from left to right) | | | |
|---|---|---|---|---|
| 20-21 | $\frac{1}{2\sqrt{2}}\begin{bmatrix} 1 & 1 \\ -j & -j \\ 1 & -1 \\ -j & j \end{bmatrix}$ | $\frac{1}{2\sqrt{2}}\begin{bmatrix} 1 & 1 \\ -j & -j \\ j & -j \\ 1 & -1 \end{bmatrix}$ | - | - |

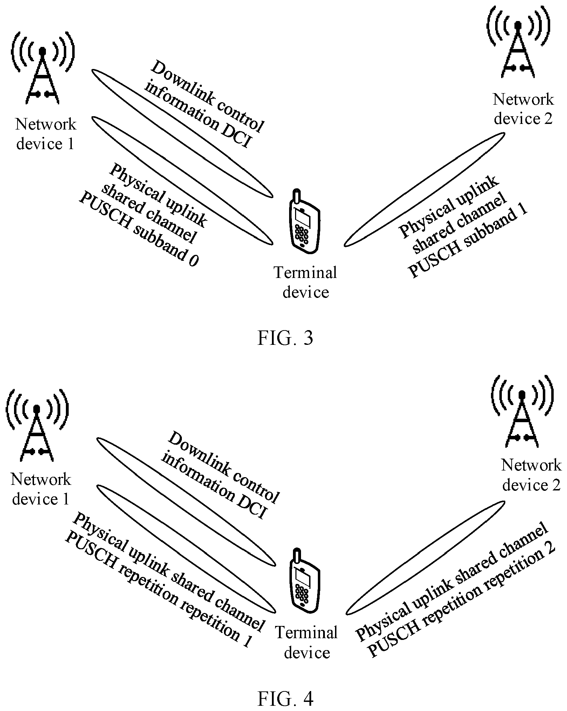

For example, as shown in FIG. 3, a network device 1 sends DCI for scheduling a PUSCH, a terminal device sends the PUSCH to the network device 1 by using a PUSCH subband (subband) 0, and the terminal device sends the PUSCH to a network device 2 by using a PUSCH subband 1.

If the PUSCH is sent in a time domain repetition manner, the network device may indicate a quantity M of repetitions of the PUSCH to be sent by the terminal device in time domain (symbol sets), M is a positive integer and M is greater than or equal to n, and each repetition in time domain is used to transmit a same TB, and uses one of the n TPMIs. Optionally, the network device may further indicate a TPMI that is used to send the PUSCH in at least one of the M repetitions, for example, indicate a TPMI that is used to send the PUSCH in an $m^{th}$ repetition, or indicate a TPMI that is used to send the PUSCH in each repetition, where $m \in \{1, 2, ... M\}$. For example, the network device may send first indication information. The first indication information is used to indicate the quantity M of repetitions of the PUSCH to be sent by the terminal device in time domain, and the first indication information may be further used to indicate the TPMI that is used by the terminal device to send the PUSCH in each repetition. The first indication information may be carried in the first signaling, or may be carried in another instruction other than the first signaling. For example, when the n TPMIs correspond to N time domain resources, the first indication information is specifically used to indicate a quantity N of repetitions of the PUSCH to be sent by the terminal device in time domain, N is a positive integer and N is greater than or equal to n, and each repetition in time domain is used to transmit a same transport block TB, and uses one of the n TPMIs.

In addition, optionally, the network device may further indicate when to start a repeated transmission (that is, a trigger condition for time domain repetition), a time domain resource occupied by each repeated transmission, and/or the like. Alternatively, a time interval between the M repeated transmissions is predefined, and each repeated transmission is defined to occupy a same time length. Alternatively, a nominal total time length occupied by the M repeated transmissions is predefined, and an actual time length occupied by each repeated transmission is determined based on a preset condition.

For example, as shown in FIG. 4, a network device 1 sends DCI for scheduling a PUSCH, a terminal device sends, based on a corresponding TPMI for sending the PUSCH in the first repetition (repetition), the PUSCH on a time-frequency resource corresponding to the repeated transmission, and the terminal device sends, based on a corresponding TPMI for sending the PUSCH in the second repetition, the PUSCH on a time-frequency resource corresponding to the repeated transmission. When determining a TPMI corresponding to each repeated transmission, the network device selects the PUSCH sent in the first repetition to adapt to a channel from the terminal device to the network device 1, and the PUSCH sent in the second repetition to adapt to a channel from the terminal device to a network device 2, to achieve a transmission performance optimization design.

Specifically, it may be agreed that the n TPMIs sequentially correspond to the N time domain units in chronological or inverse chronological order of time.

In addition, optionally, the network device may further indicate a transmission manner used by the terminal device to send the PUSCH. In different transmission manners, power control parameters corresponding to the TPMI are different. The different transmission manners include: a wideband precoding manner and a subband precoding manner (refer to the foregoing frequency selective manner of sending the PUSCH); or a fully coherent transmission manner and a non-fully coherent transmission manner (refer to the indication manner of the coherence types of the TPMIs); or a time domain repeated transmission manner and a non-time domain repeated transmission manner (refer to the foregoing time domain repetition manner of sending the PUSCH). For example, the network device may send second indication information. The second indication information is used to indicate the transmission manner used by the terminal device to send the PUSCH. The second indication information may be carried in the first signaling, or may be carried in other signaling other than the first signaling.

Specifically, in the wideband precoding manner, the PUSCH uses only one default set of power control parameters, and in the subband precoding manner, the terminal device determines, based on a plurality of TPMIs, a plurality of sets of power control parameters used by the PUSCH.

S202. The terminal device determines a power control parameter of the PUSCH based on the precoding indication information used by the PUSCH.

The terminal device may receive the precoding indication information that is indicated by the network device and that is used to send the PUSCH. For example, the terminal device may receive first signaling, and the first signaling carries a field used to indicate the n TPMIs.

In an implementation, the first signaling carries n fields used to indicate a TPMI, and each field is used to indicate a corresponding TPMI. For example, the PUSCH uses two transmit beams, and the terminal device determines, based on two fields that are carried in the first signaling and that are used to indicate a TPMI, a power control parameter corresponding to a TPMI 0 indicated by one of the fields and a power control parameter corresponding to a TPMI 1 indicated by the other field.

In another implementation, the first signaling carries one field used to indicate a TPMI, and the field is used to indicate a first TPMI. For example, the PUSCH uses two transmit beams, and the field is used to indicate a TPMI 0. The terminal device selects another TPMI that has a same coherence type as the TPMI 0 and that is different from the TPMI 0. For example, the terminal device may search for another TPMI other than the TPMI 0 based on a predefined polling mechanism, and determines the another TPMI as a TPMI 1. The terminal device determines a power control parameter corresponding to the TPMI 0 and a power control parameter corresponding to the TPMI 1.

In still another implementation, the first signaling directly indicates the n TPMIs. For example, the PUSCH uses two transmit beams, and the terminal device may determine a power control parameter corresponding to a TPMI 0 indicated by the first signaling and a power control parameter corresponding to a TPMI 1 indicated by the first signaling.

A mapping relationship between a TPMI and a power control parameter may be configured in the terminal device, each TPMI corresponds to a set of power control parameters, and at least two of the n TPMIs respectively correspond to different power control parameters. For example, for a terminal device with two antenna ports, in a mapping relationship between a TPMI and a power control parameter, a TPMI 0 corresponds to a first set of power control parameters, and a TPMI 1 corresponds to a second set of power control parameters. The terminal device may determine, based on received precoding indication information, a power control parameter corresponding to a TPMI indicated by using the precoding indication information, to determine transmit power of a PUSCH. For another example, for a terminal device with four antenna ports, in a mapping relationship between a TPMI and a power control parameter, TPMIs 0 and 2 correspond to a first set of power control parameters, and TPMIs 1 and 3 correspond to a second set of power control parameters. For another example, for a terminal device with four antenna ports, in a mapping relationship between a TPMI and a power control parameter, TPMIs 4 to 7 correspond to a first set of power control parameters, and TPMIs 8 to 11 correspond to a second set of power control parameters.

Optionally, a mapping relationship between an antenna port of the terminal device and a power control parameter may be further configured in the terminal device. The terminal device may further determine, based on Table 4, Table 5.1, or Table 5.2, an antenna port corresponding to a TPMI indicated by the precoding indication information.

If the PUSCH is sent in the frequency selective manner, the terminal device may receive subband granularity related information that is indicated by the network device and that is used to send the PUSCH, and obtain subbands through division based on the subband granularity related information. The subband granularity related information includes a subband quantity N, a subband granularity K2, and/or the like. For example, if the subband granularity related information includes the subband quantity N, the terminal device may divide, based on a total quantity of RBs for scheduling the PUSCH, the total quantity of RBs into N parts. Each of the N parts is used as a subband (RB set). If the subband granularity related information includes the subband granularity K2, the terminal device may divide, based on a total quantity of RBs for scheduling the PUSCH, the total quantity of RBs into a plurality of parts. Each of the plurality of parts includes K2 (continuous) RBs.

Optionally, a power control parameter may be related to a coherence type or a subband of a TPMI. For example, when a TPMI indicated by the precoding indication information belongs to the non-coherent type or the partially coherent type, the terminal device determines, based on a mapping relationship between TPMIs and power control parameters on different subbands, a power control parameter on a subband corresponding to the TPMI indicated by the precoding indication information. When the TPMI indicated by the precoding indication information belongs to the fully coherent type, power control parameters on different subbands are the same.

For example, the first signaling received by the terminal device may specifically carry a TPMI corresponding to a subband (RB set). For example, different subbands RB set 0 and RB set 1 both use TPMIs of the non-coherent type, that is, a transmit antenna port 0 used on the RB set 0 is different from a transmit antenna port 2 used on the RB set 1. The antenna port 0 and the antenna port 1 of the terminal device may be each associated with a power amplifier. During PUSCH transmission, the two power amplifiers may respectively transmit the PUSCH on bandwidth parts. In this way, power of a power amplifier of the terminal device can be increased, and a power spectral density of PUSCH transmission can also be improved, to improve transmission performance.

If the PUSCH is sent in the time domain repetition manner, the terminal device may receive a quantity M, indicated by the network device, of repetitions of the PUSCH to be sent by the terminal device in (symbol sets). M is a positive integer and M is greater than or equal to n. Optionally, the terminal device may further receive a TPMI that is indicated by the network device and that is used to send the PUSCH in at least one of the M repetitions, for example, an indicated TPMI that is used to send the PUSCH in an $m^{th}$ repetition, or an indicated TPMI that is used to send the PUSCH in each repetition, where $m \in \{1, 2, ... M\}$. The terminal device may determine the TPMI that is used to send the PUSCH at the $m^{th}$ time, and determines, based on the TPMI that is used to send the PUSCH at the $m^{th}$ time, a power control parameter for sending the PUSCH at the $m^{th}$ time. For example, the terminal device may receive first indication information. The first indication information is used to indicate the quantity M of repetitions of the PUSCH to be sent by the terminal device in time domain, and the first indication information may be further used to indicate the TPMI that is used by the terminal device to send the PUSCH in each repetition. The first indication information may be carried in the first signaling, or may be carried in another instruction other than the first signaling. For example, when the n TPMIs correspond to N time domain resources, the first indication information is specifically used to indicate a quantity N of repetitions of the PUSCH to be sent by the terminal device in time domain, N is a positive integer and N is greater than or equal to n, and each repetition in time domain is used to transmit a same transport block TB, and uses one of the n TPMIs. Specifically, the terminal device may determine a TPMI used by the PUSCH that is to be sent at an $m^{th}$ time in N repeated transmissions, where $m \in \{1, 2, ... N\}$, and determines a power control parameter of the PUSCH that is to be sent at the $m^{th}$ time.

In addition, optionally, the network device may further indicate when to start a repeated transmission (that is, a trigger condition for time domain repetition), a time domain resource occupied by each repeated transmission, and/or the like. Alternatively, a time interval between the M repeated transmissions is predefined, and each repeated transmission is defined to occupy a same time length. Alternatively, a nominal total time length occupied by the M repeated transmissions is predefined, and an actual time length occupied by each repeated transmission is determined based on a preset condition.

In addition, optionally, the terminal device may further receive a transmission manner that is indicated by the network device and that is used to send the PUSCH. In different transmission manners, power control parameters corresponding to the TPMI are different. The different transmission manners include: a wideband precoding manner and a subband precoding manner (refer to the foregoing frequency selective manner of sending the PUSCH); or a fully coherent transmission manner and a non-fully coherent transmission manner (refer to the indication manner of the coherence types of the TPMIs); or a time domain repeated transmission manner and a non-time domain repeated transmission manner (refer to the foregoing time domain repetition manner of sending the PUSCH).

S203. The terminal device sends the PUSCH based on the power control parameter, and the network device receives the PUSCH.

The power control parameter includes at least one of the following power control parameters: an open-loop power control parameter, a closed-loop power control parameter, a target value of transmit power, an offset of transmit power, a path loss measurement reference signal index value, or a transmit power adjustment amount. That is, a mapping relationship between a TPMI and at least one of the power control parameters may be configured in the terminal device.

Optionally, at least two sets of power control parameters may each include $P_O$, and/or $\alpha$, and/or a path loss measurement reference signal index value. A mapping relationship between each set of power control parameters and a TPMI may be indicated to the terminal device by using configuration information. For example, two parameter sets are represented as a set 0 and a set 1. In a mapping relationship between the two parameter sets and TPMIs, a TPMI 0 corresponds to the set 0, and a TPMI 1 corresponds to the set 1. Two path loss measurement reference signal index values (PL RS IDs), and a mapping relationship between the two PL RS IDs and the TPMIs may be further configured in the terminal device. For example, the two PL RS IDs include a PL RS 0 and a PL RS 1. In the mapping relationships between the two PL RS IDs and the TPMIs, the PL RS 0 corresponds to the TPMI 0, and the PL RS 1 corresponds to the TPMI 1. Two transmit power adjustment amounts (*l*) and a mapping relationship between the two *l* and the TPMIs may be further configured in the terminal device. For example, the two *l* are respectively 0 and 1. In the mapping relationship between the two *l* and the TPMIs, *l*=0 corresponds to the TPMI 0, and *l*=1 corresponds to the TPMI 1.

If the precoding indication information received by the terminal device indicates the TPMI 0, and the TPMI 0 corresponds to a subband 0, the terminal device may determine, based on the correspondence between the TPMIs and the power control parameters, that the TPMI 0 corresponds to the set 0. The set 0 includes configuration information of $P_O$ and $\alpha$ (assuming that j=2) and the PL ID 0. The terminal device inputs corresponding parameters of the set 0 into the foregoing formula for "calculating uplink transmit power of the PUSCH in a transmission occasion *i*" (referred to as a PUSCH power control formula below):

$$P_{\text{PUSCH},b,f,c}(i, j = 2, q_d = ID0, l = 0) = \min \begin{cases} P_{\text{CMAX},f,c}(i), \\ P_{\text{O\_PUSCH},b,f,c}(2) + 10\log_{10}(2^{\mu} \cdot M_{\text{RB},b,f,c}^{\text{PUSCH}}(i)) + \alpha_{b,f,c}(2) \cdot PL_{b,f,c}(ID0) + \Delta_{\text{TF},b,f,c}(i) \\ + f_{b,f,c}(i,0) \end{cases}$$

[dBm].

$P_{\text{O\_PUSCH},b,f,c}(2)$ and $\alpha_{b,f,c}(2)$ are values of $P_{\text{O}}$ and $\alpha$ in the set 0.

$PL_{b,f,c}(ID\,0)$ is path loss information of the PUSCH that is determined based on the path loss reference signal ID 0.

The terminal device may send the PUSCH in the subband 0 by using the TPMI 0 and a transmit power value that is determined based on the foregoing formula.

If the precoding indication information received by the terminal device indicates the TPMI 1, and the TPMI 1 corresponds to a subband 1, the terminal device may determine, based on the correspondence between the TPMIs and the power control parameters, that the TPMI 1 corresponds to the set 1. The set 1 includes configuration information of $P_{\text{O}}$ and $\alpha$ (assuming that j=3) and the PL RS 1. The terminal device inputs corresponding parameters of the set 1 into the PUSCH power control formula:

$$P_{\text{PUSCH},b,f,c}(i, j = 3, q_d = ID1, l = 1) = \min \left\{ \begin{array}{l} P_{\text{CMAX},f,c}(i), \\ P_{\text{O\_PUSCH},b,f,c}(3) + 10\log_{10}(2^{\mu} \cdot M_{\text{RB},b,f,c}^{\text{PUSCH}}(i)) + \alpha_{b,f,c}(3) \cdot PL_{b,f,c}(ID1) + \Delta_{\text{TF},b,f,c}(i) \\ + f_{b,f,c}(i,1) \end{array} \right\}$$

[dBm].

$P_{\text{O\_PUSCH},b,f,c}(3)$ and $\alpha_{b,f,c}(3)$ are values of $P_{\text{O}}$ and $\alpha$ in the set 1.

$PL_{b,f,c}(ID\,1)$ is path loss information of the PUSCH that is determined based on the path loss reference signal ID 1.

The terminal device may send, by using a transmit power value that is determined based on the foregoing formula, the PUSCH in the subband 1 corresponding to the TPMI 1.

According to the method provided in this embodiment of this application, in a communication process (for example, a PUSCH transmission process), the terminal device may determine, based on the precoding indication information indicating the PUSCH, a power control parameter of a TPMI indicated by the precoding indication information, and send the PUSCH based on the power control parameter. According to the method, the terminal device may implement PUSCH transmission by using an adapted power control parameter, to improve transmission performance. In addition, different TPMIs may adapt to transmission paths to different network devices, and then corresponding power control parameters are used, so that transmission performance of repeated transmissions in different subbands or different time domains may be improved. In addition, the network device may indicate the n TPMIs at a time by using the precoding indication information, to reduce redundancy in indicating the TPMIs and reduce overheads for indicating the TPMIs. In addition, each antenna port that is of the terminal device and that is configured to transmit the PUSCH may be associated with a power amplifier, and each power amplifier may transmit the PUSCH on a bandwidth part, to improve a power spectral density of PUSCH transmission.

[Manner 2]

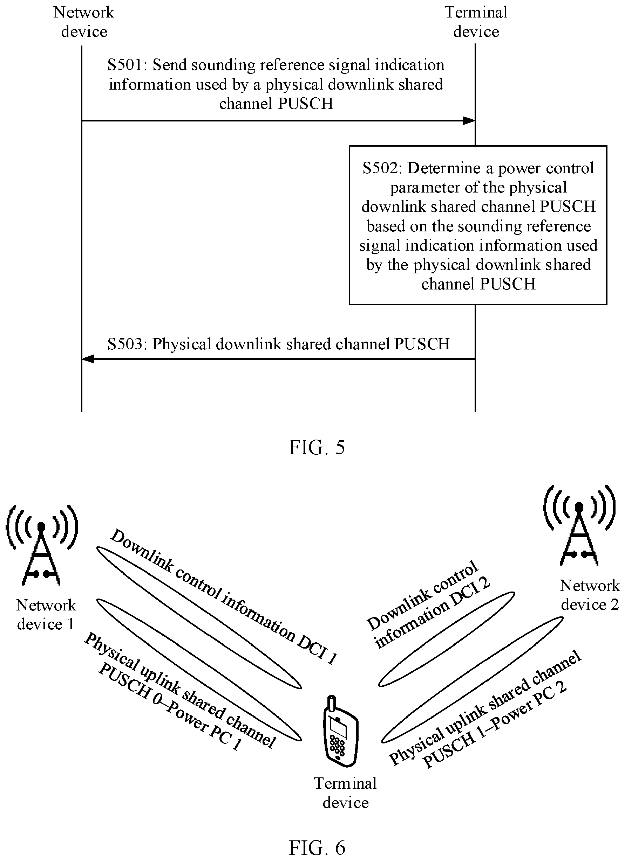

In this manner, a terminal device determines a power control parameter of a to-be-sent PUSCH based on sounding reference signal indication information. FIG. 5 is a schematic diagram of a communication process based on Manner 2. The process includes the following steps.

S501. A network device indicates sounding reference signal indication information (SRS resource indication, SRI) that is used by a terminal device to send a PUSCH.

A field of the SRI is used to indicate index values of p SRS resources (that is, indicate the p SRS resources). For example, the network device may add the index values of the p SRS resources to second signaling. Optionally, the second signaling may be DCI, may be RRC signaling, or may be other signaling or the like. The other signaling may be other existing signaling (non-DCI and RRC signaling), may be signaling obtained by improving existing signaling, or may be newly added signaling or the like. Alternatively, an SRI field in the second signaling directly indicates the index values of the p SRS resources, and content indicated by each state in the field may be predefined or configured.

In an implementation, the second signaling carries p SRI fields, and each SRI field is used to indicate a corresponding SRS resource. For example, the PUSCH uses two transmit beams, and the first signaling carries two SRI fields. One of the SRI fields is used to indicate an SRS resource 0, and the other SRI field is used to indicate an SRS resource 1. In another implementation, the second signaling may carry one SRI field, the one SRI field is used to indicate a first SRS resource, and a remaining SRS resource may be determined based on the first SRS resource. For example, the second signaling carries one SRI field, and the one SRI field is used to indicate an SRS resource 0. The terminal device may select another SRS resource different from the SRS resource 0. For example, the PUSCH uses two transmit beams, and the terminal device may search for another SRS resource other than the SRS resource 0 by using a predefined polling mechanism, and determine the another SRS resource as an SRS resource 1. In still another implementation, the second signaling carries one SRI field that directly indicates the p SRS resources. For example, the PUSCH uses two transmit beams, and the second signaling carries one SRI field. The one SRI field is used to indicate an SRS resource 0 and an SRS resource 1, as shown in Table 1. p is an integer greater than 1.

When sending SRSs on different SRS resources, the terminal device may use different beamforming manners. Therefore, when different SRS resources are indicated, it indicates that beamforming for PUSCH transmission is beamforming used to send an SRS on an SRS resource indicated by a corresponding SRI. It can be learned that the SRI essentially still indicates a precoding manner of the PUSCH.

When the SRI indicates the p SRS resources, each SRS resource corresponds to a set of power control parameters, and at least two of the p SRS resources correspond to different power control parameters of the PUSCH. For example, each of the p SRS resources corresponds to a different power control parameter. It should be understood that, the power control parameter corresponding to the SRS resource is used to determine transmit power for PUSCH transmission, but is not used to determine transmit power used to send an SRS on the SRS resource.

It should be further understood that, that at least two of the p SRS resources correspond to different power control parameters means that power control parameters of the PUSCH that correspond to the p SRS resources are independently configured.

For example, the network device configures four SRS resources, and the four SRS resources include an SRS resource 0, an SRS resource 1, an SRS resource 2, and an SRS resource 3. In a preconfigured or predefined manner, the SRS resource 0 and the SRS resource 1 may be associated with a set 0 of power control parameters, where the power control parameters may include configuration parameters such as $P_O$, and/or $\alpha$, and/or a path loss measurement reference signal index value; and the SRS resource 2 and the SRS resource 3 may be associated with a set 1 of power control parameters, where similarly, the power control parameters may include configuration parameters such as $P_O$, and/or $\alpha$, and/or a path loss measurement reference signal index value. In this case, when a signal is sent by using precoding or an antenna port represented by the SRS resource 0 and the SRS resource 1, transmit power of the signal is determined based on the configuration parameters of the set 0. When a signal is sent by using precoding or an antenna port represented by the SRS resource 2 and the SRS resource 3, transmit power of the signal is determined based on the configuration parameter of the set 1.

Specifically, an SRI state 4 in Table 1 is used as an example. An SRS resource quantity indicated by the state is equal to 2, and each SRS resource may correspond to a different time domain resource of the PUSCH. That is, the SRS resource 0 and the SRS resource 1 are respectively used to indicate precoding used to repeatedly send the PUSCH on different time domain resources. When the SRS resource 0 is used to send the PUSCH on a first time domain resource, transmit power is determined based on the set 0. When the SRS resource 1 is used to send the PUSCH on the first time domain resource, the transmit power is determined based on the set 1.

In another example, for each SRI state, correspondences between index values of different SRS resources and power control parameters are independently defined or configured. For example, in Table 1, a power control parameter corresponding to the SRS resource 0 in an SRI state 0 is different from a power control parameter corresponding to the SRS resource 0 in the SRI state 4. In other words, they are independently configured.

The p SRS resources respectively fall into at least two SRS resource groups, and SRS resources belonging to a same SRS resource group correspond to a same power control parameter. The network device may preset at least two SRS resource groups, where each SRS resource group corresponds to a set of power control parameters, and then assign a set SRS resource to a corresponding SRS resource group. Alternatively, the network device may preset the p SRS resources and the set of power control parameters corresponding to each SRS resource, and then assign SRS resources with a same power control parameter to one SRS resource group.

If the PUSCH is sent in a frequency selective manner, the network device may indicate subband granularity related information used to send the PUSCH. The subband granularity related information includes a subband quantity N, a subband granularity K2, and/or the like. Optionally, the subband granularity related information may be carried in the second instruction, or may be carried in another instruction other than the second instruction. Subsequently, the terminal device may obtain subbands through division based on the subband granularity related information. For details, refer to the foregoing S202.

In an implementation, the subband quantity N is preconfigured. For example, N is indicated by using RRC signaling or MAC CE signaling.

In a possible design, the subband quantity N is determined based on scheduled bandwidth of the PUSCH. For example, different scheduled bandwidth corresponds different N, and the relationship may be predefined.

In a possible design, the subband quantity N is determined based on a quantity of the SRS resources, for example, the subband quantity N = the quantity p the SRS resources.

In a possible design, a quantity of RBs included in each subband is preconfigured, or determined based on the scheduled bandwidth of the PUSCH. The p SRS resources correspond to N subbands, each of the N subbands includes one or more continuous RBs, SRS resources used to send the PUSCH on RBs included in each subband are the same, an RB occupied by the PUSCH includes the N subbands, p is less than or equal to N, and N is a positive integer.

For example, the network device may specifically add, to the second signaling, an SRI corresponding to a subband (RB set). In an implementation, the second signaling carries p SRI fields, and each SRI field is used to indicate an SRS resource of a specific subband. In another implementation, the second signaling carries one SRI field, the one SRI field is used to indicate an SRS resource of a first subband (a specific subband), and a remaining SRS resource may be determined based on the SRS resource used to indicate the first subband. In still another implementation, the second signaling carries one SRI field, and the one SRI field is used to indicate an SRS resource of each of p specific subbands.

In a possible design, the N subbands may be replaced with N time domain resources, for example, N OFDM symbol groups or N slots. In other words, the index values of the p SRS resources correspond to N time domain resources.

If the PUSCH is sent in a time domain repetition manner, the network device may indicate a quantity M of repetitions of the PUSCH to be sent by the terminal device in time domain (symbol sets), M is a positive integer and M is greater than or equal to p, and each repetition in time domain is used to transmit a same TB, and uses one of the p SRS resources. Optionally, the network device may further indicate an SRS resource that is used to send the PUSCH in at least one of the M repetitions, for example, indicate an SRS resource that is used to send the PUSCH in an $m^{th}$ repetition, or indicate an SRS resource that is used to send the PUSCH in each repetition, where $m \in \{1, 2, ... M\}$. For example, the network device may send third indication information. The third indication information is used to indicate the quantity M of repetitions of the PUSCH to be sent by the terminal device in time domain, and the third indication information may be further used to indicate the SRS resource that is used by the terminal device to send the PUSCH in each repetition. The third indication information may be carried in the second signaling, or may be carried in another instruction other than the second signaling. For example, when the n SRS resources correspond to N time domain resources, the third indication information is specifically used to indicate a quantity N of repetitions of the PUSCH to be sent by the terminal device in time domain, N is a positive integer and N is greater than or equal to n, and each repetition in time domain is used to transmit a same transport block TB, and uses one of the n TPMIs.

In addition, optionally, the network device may further indicate when to start a repeated transmission (that is, a trigger condition for time domain repetition), a time domain resource occupied by each repeated transmission, and/or the like. Alternatively, a time interval between the M repeated transmissions is predefined, and each repeated transmission is defined to occupy a same time length. Alternatively, a nominal total time length occupied by the M repeated transmissions is predefined, and an actual time length occupied by each repeated transmission is determined based on a preset condition.

In addition, optionally, the network device may further indicate a transmission manner used by the terminal device to send the PUSCH. In different transmission manners, power control parameters corresponding to the SRS resource (or index value of the SRS resource) are different. The different transmission manners include: a wideband precoding manner and a subband precoding manner (refer to the foregoing frequency selective manner of sending the PUSCH); or a time domain repeated transmission manner and a non-time domain repeated transmission manner (refer to the foregoing time domain repetition manner of sending the PUSCH). For example, the network device may send fourth indication information. The fourth indication information is used to indicate the transmission manner used by the terminal device to send the PUSCH. The fourth indication information may be carried in the second signaling, or may be carried in other signaling other than the second signaling.

S502. The terminal device determines a (second) power control parameter of the PUSCH based on the sounding reference signal indication information used by the PUSCH.

The terminal device may receive the sounding reference signal indication information that is indicated by the network device and that is used to send the PUSCH. For example, the terminal device may receive second signaling, and the second signaling carries a field used to indicate p SRIs.

In an implementation, the second signaling carries p SRI fields, and each SRI field is used to indicate a corresponding SRS resource. For example, the PUSCH uses two transmit beams, and the terminal device determines, based on two SRI fields carried in the second signaling, a power control parameter corresponding to an SRS resource 0 indicated by one of the SRI fields and a power control parameter corresponding to an SRS resource 1 indicated by the other SRI field. In another implementation, the second signaling carries one SRI field, and the one SRI field is used to indicate a first SRS resource. For example, the PUSCH uses two transmit beams, and the one SRI field is used to indicate an SRS resource 0. The terminal device selects another SRS resource different from the SRS resource 0. For example, the terminal device may search for another SRS resource other than the SRS resource 0 by using a predefined polling mechanism, and determine the another SRS resource as an SRS resource 1. The terminal device determines a power control parameter corresponding to the SRS resource 0 and a power control parameter corresponding to the SRS resource 1. In still another implementation, an SRI field in the second signaling directly indicates the p SRS resources. For example, the PUSCH uses two transmit beams, and the terminal device may determine that the field is used to indicate a power control parameter corresponding to an SRS resource 0 and a power control parameter corresponding to an SRS resource 1.

A mapping relationship between an SRS resource (or index value of the SRS resource) and a power control parameter may be configured in the terminal device, each SRS resource corresponds to a set of power control parameters, and at least two of the p SRS resources respectively correspond to different power control parameters.

If the PUSCH is sent in the frequency selective manner, the terminal device may receive subband granularity related information that is indicated by the network device and that is used to send the PUSCH, and obtain subbands through division based on the subband granularity related information. For a specific subband division process, refer to the foregoing S202. Details are not described again.

If the PUSCH is sent in the time domain repetition manner, the terminal device may receive a quantity M, indicated by the network device, of repetitions of the PUSCH to be sent by the terminal device in (symbol sets). M is a positive integer and M is greater than or equal to p. Optionally, the terminal device may further receive an SRS resource that is indicated by the network device and that is used to send the PUSCH in at least one of the M repetitions, for example, an indicated SRS resource that is used to send the PUSCH in an $m^{th}$ repetition, or an indicated SRS resource that is used to send the PUSCH in each repetition, where $m \in \{1, 2, ... M\}$. For example, the terminal device may receive third indication information. The third indication is used to indicate the quantity M of repetitions of the PUSCH to be sent by the terminal device in time domain, and the third indication information may be further used to indicate the SRS resource that is used by the terminal device to send the PUSCH in each repetition. The third indication information may be carried in the second signaling, or may be carried in other signaling other than the second signaling. For example, when the n SRS resources correspond to N time domain resources, the third indication information is specifically used to indicate a quantity N of repetitions of the PUSCH to be sent by the terminal device in time domain, N is a positive integer and N is greater than or equal to n, and each repetition in time domain is used to transmit a same transport block TB, and uses one of the n TPMIs. Specifically, the terminal device may determine a TPMI used by the PUSCH that is to be sent at an $m^{th}$ time in N repeated transmissions, where $m \in \{1, 2, ... N\}$, and determines a power control parameter of the PUSCH that is to be sent at the $m^{th}$ time.

In addition, optionally, the network device may further indicate when to start a repeated transmission (that is, a trigger condition for time domain repetition), a time domain resource occupied by each repeated transmission, and/or the like. A time interval between the M repeated transmissions is predefined, and each repeated transmission is defined to occupy a same time length. Alternatively, a nominal total time length occupied by the M repeated transmissions is predefined, and an actual time length occupied by each repeated transmission is determined based on a preset condition.

In addition, optionally, the terminal device receives a transmission manner that is indicated by the network device and that is used to send the PUSCH. In different transmission manners, power control parameters corresponding to the SRS resource (or index value of the SRS resource) are different. The different transmission manners include: a wideband precoding manner and a subband precoding manner (refer to the foregoing frequency selective manner of sending the PUSCH); or a time domain repeated transmission manner and a non-time domain repeated transmission manner (refer to the foregoing time domain repetition manner of sending the PUSCH).

The SRS resource quantity 4 in Table 1 is still used as an example. A current transmission manner includes a transmission manner 1, a transmission manner 2, another transmission manner, and the like. The SRI indicates a plurality of SRS resources. The terminal device may determine power control parameters corresponding to the SRS resources corresponding to the SRI (for example, SRI=0-3). When the transmission manner 1 or the transmission manner 2 is used, transmit power for PUSCH transmission is determined by using power control parameters 0 and 1. When the another transmission manner is used, transmit power for PUSCH transmission is determined by using a power control parameter 4.

S503. The terminal device sends the PUSCH based on the power control parameter, and the network device receives the PUSCH.

For a process of performing S503 by the terminal device, refer to the process of S203. Details are not described again.

According to the method provided in this embodiment of this application, in a communication process, the terminal device may determine, based on the sounding reference signal indication information indicating the PUSCH, a power control parameter of an index value of an SRS resource indicated by the sounding reference signal indication information, and send the PUSCH based on the power control parameter. According to the method, different SRIs may adapt to transmission paths to different network devices, and then corresponding power control parameters are used, to improve transmission performance of repeated transmissions in different subbands or different time domains. In addition, the network device may indicate the index values of the p SRS resources at a time by using the sounding reference signal indication information, to reduce redundancy in indicating the index values of the SRS resources, and reduce overheads for indicating the index values of the SRS resources.

[Manner 3]

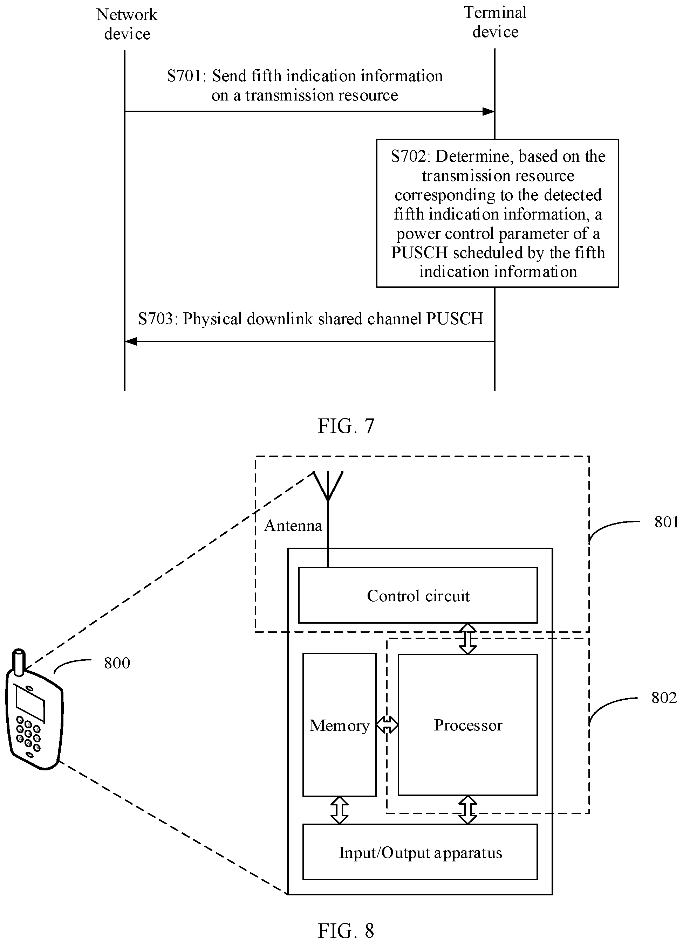

A plurality of network devices may coordinately receive and process a PUSCH, to improve reliability of PUSCH transmission. As shown in FIG. 6, when two network devices coordinately receive and process a PUSCH, the two network devices may respectively occupy different control resource sets (control resource set, CORESET) (groups) to deliver DCI for scheduling a PUSCH. For example, a network device 1 sends, on a CORESET (group) 0, DCI 1 for scheduling a PUSCH 0, and a network device 2 sends, on a CORESET (group) 1, DCI 2 for scheduling a PUSCH 1. It is assumed herein that both the CORESET 0 and the CORESET 1 are configured in same bandwidth, for example, configured in a same component carrier (component carrier) or in a same bandwidth part (bandwidth part). In a conventional technology, the PUSCHs scheduled by the DCI 1 and the DCI 2 generally share a same set of power control parameters, for example, configuration parameters such as $P_O$, and/or $\alpha$, and/or a path loss measurement reference signal index value. As a result, transmit power of a signal sent to different network devices cannot adapt to corresponding transmission paths, affecting transmission efficiency of a terminal device. In view of this, in this manner, a terminal device may determine, based on a transmission resource corresponding to scheduling information DCI sent by a network device, a power control parameter of a to-be-sent PUSCH. The network device may preconfigure power control parameters associated with different transmission resources, so that the terminal device may use corresponding power control parameters when sending different PUSCHs. FIG. 7 is a schematic diagram of a communication process based on Manner 3. The process includes the following steps.

S701. A network device sends fifth indication information on a transmission resource.

The network device preconfigures a plurality of transmission resources. The transmission resources are used to carry downlink control signaling. The network device may select one or more transmission resources from the plurality of transmission resources to deliver control signaling. Different transmission resources may carry independent control signaling, that is, control signaling on different transmission resources may independently schedule data. The network device preconfigures power control parameters associated with different transmission resources, so that power control parameters corresponding to different transmission resources are independently configured. In this way, the network device does not need to additionally indicate, by using DCI signaling, information used to determine a power control parameter, thereby reducing indication overheads. For example, the network device sends third signaling on a transmission resource, and the third signaling includes the fifth indication information. The third signaling may be DCI, may be RRC signaling, or may be other signaling or the like. The other signaling may be other existing signaling (non-DCI and RRC signaling), may be signaling obtained by improving existing signaling, or may be newly added signaling or the like.

The transmission resource includes a CORESET or a CORESET group, the CORESET or the CORESET group is used to configure a physical time-frequency resource for carrying downlink control signaling, the time-frequency resource may be understood as a physical resource pool for carrying downlink control signaling, and a physical resource actually occupied by control signaling may be further selected from the physical resource pool. Further, the CORESET is further used to configure a quasi-co-location assumption for sending a signal on the time-frequency resource, scrambling information of a sequence, and the like. When the network device configures a plurality of CORESETs (groups), a plurality of (sets of) power control parameters may be further configured, a quantity of sets of power control parameters may be less than or equal to a quantity of CORESETs (groups), and a correspondence between the CORESET (groups) and the power control parameters is configured. For example, the transmission resource includes a CORESET group, the network device performs the following configurations: A CORESET group 1 corresponds to a first set of power control parameters, a CORESET group 2 corresponds to a second set of power control parameters, and each set of power control parameters independently includes a corresponding power control parameter configuration.

Optionally, each CORESET group includes one or more CORESETs. For example, the network device configures three CORESETs, and a CORESET ID 0 and a CORESET ID 1 belong to a CORESET group 0, and a CORESET ID 2 belongs to a CORESET group 1. For example, the network device sends the fifth indication information by using DCI. For example, the DCI may be in a compact/simplified DCI format. A type of a field included in the format is fixed. A size of a frequency domain resource indication field depends on a quantity of RBs occupied by a BWP, while a size of another field included in the DCI is fixed, and a quantity of bits (bits) corresponding to the another field is also fixed. A PUSCH scheduled in this format has one layer, and is in a single-user transmission mode and an open-loop transmission mode. The one layer of the scheduled PUSCH indicates that layer quantity indication signaling is not included, and the single-user transmission mode indicates that the DCI does not include port indication information of data or a demodulation reference signal (demodulation reference signal, DMRS). The DCI format may not include a field that indicates to select a set of power control parameters from a plurality of sets of power control parameters.

Optionally, the compact/simplified DCI format (DCI format 0_0) includes at least the following fields: DCI format indication information (occupying 1 bit, and used to indicate downlink DCI or uplink DCI), a frequency domain resource location indication (occupying $\left\lceil \log_2(N_{RB}^{UL,BWP}(N_{RB}^{UL,BWP}+1)/2) \right\rceil$ bits, where $N_{RB}^{UL,BWP}$ represents a quantity of RBs occupied by an uplink BWP), time domain resource location indication information (occupying 4 bits), a frequency hopping flag (frequency hopping flag, occupying 1 bit), a modulation and coding scheme (modulation and coding scheme, occupying 5 bits), a new data indicator (new data indicator, occupying 1 bit), a redundancy version (RV, occupying 2 bits), a hybrid automatic repeat request (HARQ) process number (occupying 4 bits), a transmit power control command (TPC command, occupying 2 bits) for a scheduled PUCCH, a bit filled based on a quantity of bits in another DCI format, and a UL/SUL indication (used to indicate a carrier for transmitting the PUSCH, where if a cell has two UL bandwidth parts and a quantity of bits in DCI format 1_0 before 0 is filled is greater than a quantity of bits in DCI format 0_0 before 0 is filled, 1 bit is occupied; otherwise, 0 bit is occupied).

Optionally, a conventional DCI format (DCI format 0_1) includes at least the following fields: DCI format indication information (occupying 1 bit, and used to indicate downlink DCI or uplink DCI), a carrier indicator (carrier indicator, occupying 0 bit or 3 bits as determined by an RRC configuration), a UL/SUL indication (used to indicate a carrier for transmitting the PUSCH, and configured by RRC, where if a supplementary UL cell is configured, 1 bit is occupied), a BWP indication (used to indicate an activated uplink BWP in the carrier, and occupying 0 bit, 1 bit, or 2 bits as determined by a configuration of the network device), a frequency domain resource location indication (occupying

$$\left\lceil \log_2(N_{RB}^{UL,BWP}(N_{RB}^{UL,BWP}+1)/2) \right\rceil$$ bits, and related to a quantity of RBs included in the activated BWP and a resource assignment manner), frequency domain resource location indication information (used to indicate a location of a time domain resource occupied by the PUSCH, and occupying 0 bit, 1 bit, 2 bits, 3 bits, or 4 bits as determined by the RRC configuration), a frequency hopping flag (occupying 0 bit or 1 bit as determined by the RRC configuration), a modulation and coding scheme (occupying 5 bits), a new data indicator (new data indicator, used to indicate whether the PUSCH is newly transmitted data or retransmitted data, and occupying 1 bit), a redundancy version (used to indicate a coding manner of the PUSCH, and occupying 2 bits), a HARQ process number (occupying 4 bits), a first downlink assignment index (downlink assignment index, DAI, occupying 1 bit or 2 bits, where the 1 bit is used for a semi-persistent HARQ-ACK codebook, to indicate whether a HARQ-ACK is carried on the PUSCH, and the 2 bits are used for a dynamic HARQ-ACK codebook, to indicate a current total quantity of HARQ-ACK bits), a second DAI (occupying 0 bit or 2 bits, where the 2 bits are used for a dynamic HARQ-ACK codebook, to indicate a current total quantity of HARQ-ACK bits of a second sub-codebook, and the 0 bit is used in another case), a transmit power control command (TPC command, occupying 2 bits) for a scheduled PUCCH, an SRS resource selection indication (occupying $$\left\lceil \log_2\left( \sum_{k=1}^{\min\{L_{max}, N_{SRS}\}} \binom{N_{SRS}}{k} \right) \right\rceil$$

bits or $\left\lceil \log_2(N_{SRS}) \right\rceil$ bits as determined by the RRC configuration, and used to selectively trigger an aperiodic SRS, where $N_{SRS}$ is a quantity of configured SRS resources, and $L_{max}^{PUSCH}$ is a maximum quantity of layers for PUSCH transmission), a precoding information and layer quantity indication (occupying 0 bit, 1 bit, 2 bits, 3 bits, 4 bits, 5 bits, or 6 bits as determined by the RRC configuration, and used to indicate a quantity of layers of the PUSCH, a quantity of corresponding DMRS ports, and precoding information), an antenna port indication (occupying 2 bits, 3 bits, 4 bits, or 5 bits, and used to indicate a DMRS port number), an SRS request (occupying 2 bits or 3 bits, and used to indicate to trigger the aperiodic SRS), a CSI request (occupying 0 bit, 1 bit, 2 bits, 3 bits, 4 bits, 5 bits, or 6 bits as determined by the RRC configuration, and used to indicate to selectively trigger aperiodic CSI feedback and a corresponding measurement CSI-RS), code block group (Code Block Group, CBG) transmission information (occupying 0 bit, 2 bits, 4 bits, 6 bits, or 8 bits as determined by the RRC configuration, and related to a quantity of code blocks), a PTRS-DMRS association (occupying 0 bit or 2 bits as determined by the RRC configuration, and used to indicate a frequency domain location occupied by a PTRS), a beta offset indication (occupying 0 bit or 2 bits as determined by the RRC configuration, and used to indicate an RE location at which UCI is carried on the PUSCH), and DMRS sequence initialization (occupying 0 bit or 1 bit as determined by the RRC configuration, and used to indicate the RE location at which the UCI is carried on the PUSCH).

S702. A terminal device determines, based on the transmission resource corresponding to the detected fifth indication information, a power control parameter of a PUSCH scheduled by the fifth indication information.

A correspondence between a transmission resource and a power control parameter may be preconfigured in the terminal device. For example, the terminal device may receive fourth signaling sent by the network device, and the fourth signaling is used to indicate the correspondence between a transmission resource and a power control parameter.

For example, configurations of the network device that a CORESET group 1 corresponds to a first set of power control parameters and a CORESET group 2 corresponds to a second set of power control parameters are configured in the terminal device, and three CORESETs are configured in the terminal device, including a CORESET ID 0, a CORESET ID 1, and a CORESET ID 2. The terminal device performs DCI detection on the three configured CORESETs. It may be detected that DCI 1 is located on the CORESET ID 0 or the CORESET ID 1, where the CORESET ID 0 and the CORESET ID 1 are located in the CORESET group 1. It may be detected that DCI 2 is located on the CORESET ID 2, where the CORESET ID 2 is located in the CORESET group 2. The DCI 1 and the DCI 2 correspond to different CORESET groups. The terminal device may determine, based on the CORESET group to which the CORESET on which the detected DCI is located belongs, a power control parameter corresponding to the CORESET, determine, based on the power control parameter, transmit power of a PUSCH scheduled by the DCI, and send the PUSCH.

S703. The terminal device sends the PUSCH based on the power control parameter, and the network device receives the PUSCH.

Optionally, at least two sets of power control parameters may each include $P_O$, and/or $\alpha$, and/or a path loss measurement reference signal index value. A mapping relationship between each set of power control parameters and a CORESET group may be indicated to the terminal device by using configuration information. For example, two parameter sets are represented as a set 0 and a set 1. In a mapping relationship between the two parameter sets and CORESET groups, a CORESET group 0 corresponds to the set 0, and a CORESET group 1 corresponds to the set 1. Two PL RS IDs and a mapping relationship between the two PL RS IDs and the CORESET groups may be further configured in the terminal device. For example, the CORESET group 0 corresponds to a PL RS 0, and the CORESET group 1 corresponds to a PL RS 1. Two $l$ and a mapping relationship between the two $l$ and the CORESET groups may be further configured in the terminal device. For example, the CORESET group 0 corresponds to $l$=0, and the CORESET group 1 corresponds to $l$=1.

If the terminal device receives the DCI 1 located in the CORESET group 0, and the DCI 1 schedules a PUSCH 0, the terminal device may determine the set 0 corresponding to the CORESET group 0. The set 0 includes configuration information of $P_O$ and $\alpha$ (assuming that j=2) and the PL ID 0. The terminal device inputs corresponding parameters of the set 0 into a "PUSCH power control formula":

$$P_{\text{PUSCH},b,f,c}(i,j=2,q_d=ID0,l=0)=\min\left\{ \begin{array}{l} P_{\text{CMAX},f,c}(i), \\ P_{\text{O\_PUSCH},b,f,c}(2)+10\log_{10}(2^{\mu}\cdot M_{\text{RB},b,f,c}^{\text{PUSCH}}(i))+\alpha_{b,f,c}(2)\cdot PL_{b,f,c}(ID0)+\Delta_{\text{TF},b,f,c}(i) \\ +f_{b,f,c}(i,0) \end{array} \right\}$$

[dBm].

$P_{\text{O\_PUSCH},b,f,c}(2)$ and $\alpha_{b,f,c}(2)$ are values of $P_O$ and $\alpha$ in the set 0.

$PL_{b,f,c}(ID0)$ is path loss information of the PUSCH that is determined based on the path loss reference signal ID 0.

The terminal device may send, by using the PUSCH 0 scheduled by the DCI 1 in the CORESET group 0, the PUSCH 0 by using a transmit power value that is determined based on the foregoing formula.

If the terminal device receives the DCI 2 located in the CORESET group 1, and the DCI 2 schedules a PUSCH 1, the terminal device may determine the set 1 corresponding to the CORESET group 1. The set 1 includes configuration information of $P_O$ and $\alpha$ (assuming that j=3) and the PL ID 1. The terminal device inputs corresponding parameters of the set 1 into the "PUSCH power control formula":

$$P_{\text{PUSCH},b,f,c}(i,j=3,q_d=ID1,l=1)=\min\left\{ \begin{array}{l} P_{\text{CMAX},f,c}(i), \\ P_{\text{O\_PUSCH},b,f,c}(3)+10\log_{10}(2^{\mu}\cdot M_{\text{RB},b,f,c}^{\text{PUSCH}}(i))+\alpha_{b,f,c}(3)\cdot PL_{b,f,c}(ID1)+\Delta_{\text{TF},b,f,c}(i) \\ +f_{b,f,c}(i,1) \end{array} \right\}$$

[dBm].

$P_{\text{O\_PUSCH},b,f,c}(3)$ and $\alpha_{b,f,c}(3)$ are values of $P_O$ and $\alpha$ in the set 1.

$PL_{b,f,c}(ID1)$ is path loss information of the PUSCH that is determined based on the path loss reference signal ID 1.

The terminal device may send, by using the PUSCH 1 scheduled by the DCI 2 in the CORESET group 1, the PUSCH 1 by using a transmit power value that is determined based on the foregoing formula.

According to the method provided in this embodiment of this application, in a communication process, based on the transmission resource used when the network device sends the fifth indication information, the terminal device may determine the power control parameter of the transmission resource, and send the PUSCH based on the power control parameter. According to the method, different network devices may independently schedule PUSCH resources, and the scheduled PUSCH resources respectively correspond to different power control parameters. The terminal device may adapt independent transmission paths based on power control parameters respectively corresponding to different network devices, to improve (uplink) transmission performance. In addition, in the method in this embodiment of this application, DCI signaling does not need to include a field specifically used to indicate power control parameter selection, thereby avoiding a problem of an uplink resource waste and a problem of increasing a quantity of DCI bits that are caused by additionally configuring an SRS resource by the network device.

It may be understood that, in the foregoing method embodiments, methods and operations implemented by the terminal device may alternatively be implemented by a component (for example, a chip or a circuit) that can be used on the terminal device, and methods and operations implemented by the network device may alternatively be implemented by a component (for example, a chip or a circuit) that can be used on the network device.

The communication method in the embodiments of this application is described above in detail with reference to FIG. 1 to FIG. 7. A communication apparatus in the embodiments of this application is described below in detail with reference to FIG. 8 to FIG. 10.

FIG. 8 is a schematic diagram of a structure of a terminal device according to an embodiment of this application. The terminal device may be applied to the system shown in FIG. 2, to perform functions of the terminal device in the foregoing method embodiments. For ease of description, FIG. 8 shows only main components of the terminal device. As shown in FIG. 8, the terminal device 800 includes a processor, a memory, a control circuit, an antenna, and an input/output apparatus. The processor is mainly configured to process a communication protocol and communication data, control the entire terminal device, execute a software program, and process data of the software program, for example, configured to support the terminal device in performing actions described in the foregoing method embodiments, for example, determining a power control parameter of a PUSCH based on precoding indication information used by the PUSCH. The memory is mainly configured to store the software program and data, for example, store the correspondences between indication information and combination information described in the foregoing embodiments. The control circuit is mainly configured to perform conversion between a baseband signal and a radio frequency signal, and process the radio frequency signal. A combination of the control circuit and the antenna may also be referred to as a transceiver, mainly configured to send/receive a radio frequency signal in an electromagnetic wave form. The input/output apparatus, for example, a touchscreen, a display, or a keyboard, is mainly configured to receive data input by a user and output data to a user.

After the terminal device is powered on, the processor may read the software program in a storage unit, interpret and execute instructions of the software program, and process the data of the software program. When data needs to be wirelessly sent, after performing baseband processing on the to-be-sent data, the processor outputs a baseband signal to a radio frequency circuit. After performing radio frequency processing on the baseband signal, the radio frequency circuit sends a radio frequency signal to the outside in the electromagnetic wave form through the antenna. When data is sent to the terminal device, the radio frequency circuit receives a radio frequency signal through the antenna, converts the radio frequency signal into a baseband signal, and outputs the baseband signal to the processor, and the processor converts the baseband signal into data and processes the data.

A person skilled in the art may understand that for ease of description, FIG. 8 shows only one memory and one processor. In an actual terminal device, there may be a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process a communication protocol and communication data. The central processing unit is mainly configured to control the entire terminal device, execute a software program, and process data of the software program. The processor in FIG. 8 may integrate functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be embedded in the processor, or may be stored in a storage unit in a form of a software program. The processor executes the software program to implement a baseband processing function.

In this embodiment of this application, the antenna with a transceiver function and the control circuit may be considered as a transceiver unit 801 of the terminal device 800, for example, configured to support the terminal device in receiving DCI information. The processor with a processing function is considered as a processing unit 802 of the terminal device 800. As shown in FIG. 8, the terminal device 800 includes a transceiver unit 801 and a processing unit 802. The transceiver unit may also be referred to as a transceiver, a transceiver apparatus, or the like. Optionally, a component that is in the transceiver unit 801 and that is configured to implement a receiving function may be considered as a receiving unit, and a component that is in the transceiver unit 801 and that is configured to implement a sending function may be considered as a sending unit. In other words, the transceiver unit 801 includes a receiving unit and a sending unit. The receiving unit may also be referred to as a receiver, an input port, a receive circuit, or the like. The sending unit may also be referred to as a transmitter, an output port, a transmit circuit, or the like.

The processor 802 may be configured to execute instructions stored in the memory, to control the transceiver unit 801 to receive a signal and/or send a signal, to complete the functions of the terminal device in the foregoing method embodiments. In an implementation, a function of the transceiver unit 801 may be implemented by using a transceiver circuit or a dedicated transceiver chip.

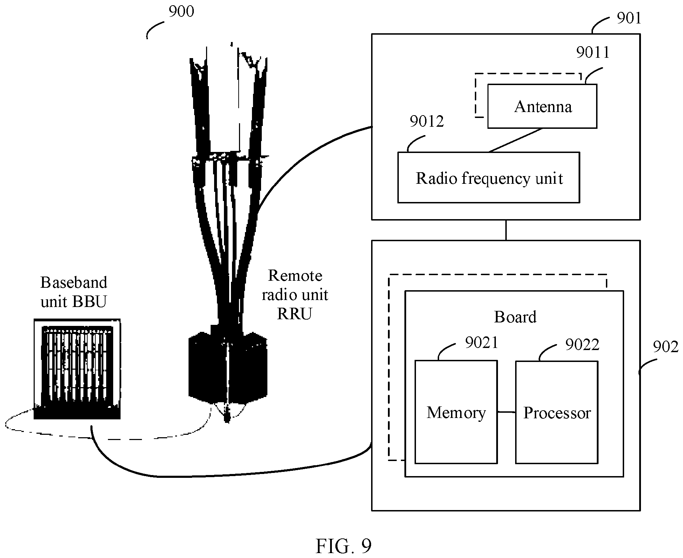

FIG. 9 is a schematic diagram of a structure of a network device according to an embodiment of this application, for example, may be a schematic diagram of a structure of a base station. As shown in FIG. 9, the base station may be applied to the system shown in FIG. 1, to perform functions of the network device in the foregoing method embodiments. The base station 900 includes one or more radio frequency units, for example, a remote radio unit (remote radio unit, RRU) 901, and one or more baseband units (baseband unit, BBU) (which may also be referred to as a digital unit, DU) 902. The RRU 901 may be referred to as a transceiver unit, a transceiver, a transceiver circuit, a transceiver component, or the like, and may include at least one antenna 9011 and a radio frequency unit 9012. The RRU 901 part is mainly configured for receiving and sending of radio frequency signals and conversion between a radio frequency signal and a baseband signal, for example, configured to send the signaling messages in the foregoing embodiments to the terminal device. The BBU 902 part is mainly configured to perform baseband processing, control the base station, and the like. The RRU 901 and the BBU 902 may be physically disposed together, or may be physically disposed separately, that is, as a distributed base station.

The BBU 902 is a control center of the base station, may also be referred to as a processing unit, and is mainly configured to complete baseband processing functions such as channel coding, multiplexing, modulation, and spectrum spreading. For example, the BBU (processing unit) 902 may be configured to control the base station to perform operation procedures related to the network device in the foregoing method embodiments.

In an example, the BBU 902 may include one or more boards. A plurality of boards may all support a radio access network of a single access standard (for example, an LTE network), or may respectively support radio access networks of different access standards (for example, an LTE network, a 5G network, or other networks). The BBU 902 further includes a memory 9021 and a processor 9022. The memory 9021 is configured to store necessary instructions and data. For example, the memory 9021 stores the correspondence between the TPMIs and the power control parameters in the foregoing embodiments. The processor 9022 is configured to control the base station to perform a necessary action, for example, configured to control the base station to perform operation procedures related to the network device in the foregoing method embodiments. The memory 9021 and the processor 9022 may serve one or more boards. In other words, a memory and a processor may be deployed on each board. Alternatively, a plurality of boards may share a same memory and a same processor. In addition, a necessary circuit may be further disposed on each board.

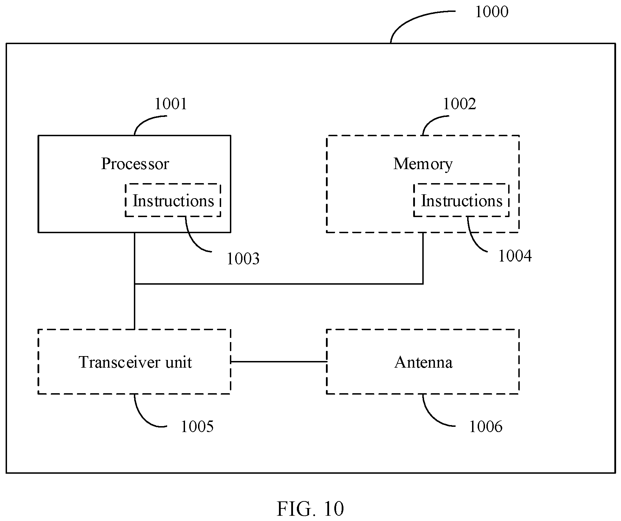

FIG. 10 is a schematic diagram of a structure of a communication apparatus 1000. The apparatus 1000 may be configured to implement the methods described in the foregoing method embodiments. For details, refer to the descriptions in the foregoing method embodiments. The communication apparatus 1000 may be a chip, a network device (such as a base station), a terminal device, another network device, or the like.

The communication apparatus 1000 includes one or more processors 1001. The processor 1001 may be a general-purpose processor, a dedicated processor, or the like. For example, the processor 1001 may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program. The communication apparatus may include a transceiver unit, configured to input (receive) and output (send) a signal. For example, the communication apparatus may be a chip, and the transceiver unit may be an input and/or output circuit of the chip, or a communication interface. The chip may be used on a terminal, a base station, or another network device. For another example, the communication apparatus may be a terminal, a base station, or another network device, and the transceiver unit may be a transceiver, a radio frequency chip, or the like.

The communication apparatus 1000 includes one or more processors 1001, and the one or more processors 1001 may implement the methods of the network device or the terminal device in the embodiments shown in FIG. 2, FIG. 5, and FIG. 7.

In a possible design, the communication apparatus 1000 is configured to receive a PUSCH. For details, refer to related descriptions in the foregoing method embodiments. For example, the PUSCH may be received by using a transceiver, an input/output circuit, or an interface of a chip.

In a possible design, the communication apparatus 1000 is configured to send a PUSCH. For example, the PUSCH may be generated by using one or more processors, and the PUSCH may be sent by using a transceiver, an input/output circuit, or an interface of a chip.

Optionally, in addition to implementing the methods in the embodiments shown in FIG. 2, FIG. 5, and FIG. 7, the processor 1001 may further implement other functions.

Optionally, in a design, the processor 1001 may include instructions 1003, and the instructions may be run on the processor, to enable the communication apparatus 1000 to perform the methods described in the foregoing method embodiments.

In another possible design, the communication apparatus 1000 may include a circuit, and the circuit may implement functions of the network device or the terminal device in the foregoing method embodiments.

In still another possible design, the communication apparatus 1000 may include one or more memories 1002, storing instructions 1004, and the instructions may be run on the processor, to enable the communication apparatus 1000 to perform the methods described in the foregoing method embodiments. Optionally, the memory may further store data. Optionally, the processor may also store instructions and/or data. For example, the one or more memories 1002 may store the correspondences described in the foregoing embodiments, or related parameters or tables in the foregoing embodiments. The processor and the memory may be separately disposed, or may be integrated together.

In still another possible design, the communication apparatus 1000 may further include a transceiver unit 1005 and an antenna 1006. The processor 1001 may be referred to as a processing unit, and controls the communication apparatus (a terminal or a base station). The transceiver unit 1005 may be referred to as a transceiver, a transceiver circuit, a transceiver component, or the like, configured to implement a transceiver function of the communication apparatus by using the antenna 1006.

This application further provides a communication system, including one or more network devices and one or more terminal devices described above.

It should be understood that, the processor in embodiments of this application may be a central processing unit (Central Processing Unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

It should be understood that, the terminal device 1000 shown in FIG. 10 can implement processes related to the terminal device in the method embodiments of FIG. 2 to FIG. 7. Operations and/or functions of modules in the terminal device 1000 are respectively used to implement corresponding procedures in the method embodiments of FIG. 2 to FIG. 7. For details, refer to the descriptions in the foregoing method embodiments. To avoid repetition, detailed descriptions are properly omitted herein.

It should be understood that, in the embodiments of this application, the processor 9022 or the processor 1001 may be implemented by using a processing unit or a chip. Optionally, the transceiver may include the radio frequency unit 9012 or the transceiver unit 1005. The embodiments of this application are not limited thereto.

It should be noted that, the processor in embodiments of this application may be an integrated circuit chip, and has a signal processing capability. In an implementation process, steps in the foregoing method embodiments are implemented by using a hardware integrated logic circuit in the processor, or by using instructions in a form of software. The processor may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) and is used as an external cache. By way of example but not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the systems and methods described in this specification includes but is not limited to these and any memory of another appropriate type.

An embodiment of this application further provides a computer-readable medium, storing a computer program. When the computer program is executed by a computer, the method described in any one of the foregoing method embodiments is implemented.

An embodiment of this application further provides a computer program product. When the computer program product is executed by a computer, the method described in any one of the foregoing method embodiments is implemented.

All or a part of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (Digital Video Disc, DVD)), a semiconductor medium (for example, a solid-state drive (Solid-State Drive, SSD)), or the like.

It should be understood that the processing apparatus may be a chip. The processor may be implemented by hardware, or may be implemented by software. When the processor is implemented by hardware, the processor may be a logic circuit, an integrated circuit, or the like. When the processor is implemented by software, the processor may be a general-purpose processor. The general-purpose processor is implemented by reading software code stored in a memory. The memory may be integrated into the processor, or may be located outside the processor and exist independently.

It should be understood that "one embodiment" or "an embodiment" mentioned throughout the specification means that particular features, structures, or characteristics related to embodiment are included in at least one embodiment of this application. Therefore, "in one embodiment" or "in an embodiment" appearing throughout the specification does not refer to a same embodiment. In addition, these particular features, structures, or characteristics may be combined in one or more embodiments in any appropriate manner. It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

In addition, the terms "system" and "network" are usually used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that in embodiments of this application, "B corresponding to A" indicates that B is associated with A, and B may be determined based on A. However, it should be understood that determining B based on A does not mean that B is determined based only on A. B may alternatively be determined based on A and/or other information.

A person of ordinary skill in the art may be aware that, in combination with the examples described in embodiments disclosed in this specification, units and algorithm steps can be implemented by electronic hardware, computer software, or a combination thereof. To clearly describe the interchangeability between hardware and software, the foregoing has generally described compositions and steps of each example based on functions. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the foregoing apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments of this application.

In addition, function units in embodiments of this application may be integrated into one processing unit, or each of the units may exist alone physically, or two or more units may be integrated into one unit. The integrated unit may be implemented in a form of hardware, or may be implemented in a form of a software function unit.

With descriptions of the foregoing implementations, a person skilled in the art may clearly understand that this application may be implemented by hardware, firmware, or a combination thereof. When this application is implemented by software, the foregoing functions may be stored in a computer-readable medium or transmitted as one or more instructions or code in a computer-readable medium. The computer-readable medium includes a computer storage medium and a communication medium. The communication medium includes any medium that facilitates transmission of a computer program from one place to another. The storage medium may be any available medium accessible to a computer. The following provides an example but does not impose a limitation: The computer-readable medium may include a RAM, a ROM, an EEPROM, a CD-ROM, another compact disc storage, a magnetic disk storage medium, another magnetic storage device, or any other medium that can be used to carry or store expected program code in a form of an instruction or a data structure and can be accessed by the computer. In addition, any connection may be properly defined as a computer-readable medium. For example, if software is transmitted from a website, a server, or another remote source by using a coaxial cable, an optical fiber/cable, a twisted pair, a digital subscriber line (DSL), or wireless technologies such as infrared ray, radio, and microwave, the coaxial cable, optical fiber/cable, twisted pair, DSL, or wireless technologies such as the infrared ray, radio, and microwave all fall within the definition of the medium. A disk (Disk) and a disc (disc) used in this application include a compact disc (CD), a laser disc, an optical disc, a digital versatile disc (DVD), a floppy disk, and a Blu-ray disc, where the disk generally copies data in a magnetic manner, and the disc copies data optically in a laser manner. The foregoing combination shall also be included in the protection scope of the computer-readable medium.

In conclusion, the foregoing descriptions are merely examples of embodiments of the technical solutions of this application, but are not intended to limit the protection scope of this application. Any modification, equivalent replacement, or improvement made without departing from the spirit and principle of this application shall fall within the protection scope of this application.

**Claims**

1. A communication method, comprising:

   determining, by a terminal device, a power control parameter of a physical uplink shared channel PUSCH based on precoding indication information used by the PUSCH, wherein the precoding indication information comprises n transmitted precoding matrix indicators TPMIs, each TPMI corresponds to a set of power control parameters, at least two of the n TPMIs respectively correspond to different power control parameters, and each TPMI corresponds to some time-frequency resources occupied by the PUSCH, wherein n is a positive integer; and
   sending, by the terminal device, the PUSCH based on the power control parameter.

2. The method according to claim 1, wherein each of the n TPMIs corresponds to a matrix, a row of the matrix corresponds to a transmit antenna port for sending the PUSCH, and a column of the matrix corresponds to a transport layer of the PUSCH.

3. The method according to claim 2, wherein the n TPMIs correspond to N subbands, each of the N subbands comprises one or more continuous resource blocks RBs, TPMIs used on the RBs comprised in each subband are the same, an RB occupied by the PUSCH comprises the N subbands, wherein n is less than or equal to N, and N is a positive integer.

4. The method according to claims 1 to 3, wherein the n TPMIs have a same coherence type, and the coherence type comprises a non-coherent type or a partially coherent type.

5. The method according to any one of claims 1 to 4, wherein the n TPMIs respectively fall into at least two TPMI groups, and TPMIs belonging to a same TPMI group correspond to a same power control parameter; and

   when the n TPMIs belong to the non-coherent type, locations of non-zero elements of TPMIs in different TPMI groups are different; or
   when the n TPMIs belong to the partially coherent type, locations of non-zero elements of TPMIs in different TPMI groups are different, and/or locations of non-zero elements of TPMIs in a same TPMI group are the same.

6. The method according to claim 4, wherein that the n TPMIs have a same coherence type further comprises:
   the coherence type of the n TPMIs is the fully coherent type, and the n TPMIs correspond to a same set of power control parameters.

7. The method according to any one of claims 1 to 6, wherein before the determining, by a terminal device, a power control parameter of a PUSCH based on precoding indication information used by the PUSCH, the method further comprises:

   receiving, by the terminal device, first indication information, wherein the first indication information is used to indicate a quantity M of repetitions of the PUSCH to be sent by the terminal device in time domain, wherein M is a positive integer and M is greater than or equal to n, and each repetition in time domain is used to transmit a same transport block TB, and uses one of the n TPMIs; and
   the determining, by a terminal device, a power control parameter of a PUSCH based on precoding indication information used by the PUSCH comprises:
   determining, by the terminal device, a TPMI used by the PUSCH that is to be sent at an $m^{th}$ time, wherein $m \in \{1, 2, ... M\}$; and determining, based on the precoding matrix, a power control parameter of the PUSCH that is to be sent at the $m^{th}$ time.

8. The method according to any one of claims 1 to 7, wherein the power control parameter comprises at least one of the following power control parameters: an open-loop power control parameter, a closed-loop power control parameter, a target value of transmit power, an offset of transmit power, a path loss measurement reference signal index value, and a transmit power adjustment amount.

9. A communication method, comprising:

indicating, by a network device, precoding indication information that is used by a terminal device to send a physical uplink shared channel PUSCH, wherein the precoding indication information comprises n transmitted precoding matrix indicators TPMIs, each TPMI corresponds to a set of power control parameters, at least two of the n TPMIs respectively correspond to different power control parameters, and each TPMI corresponds to some time-frequency resources occupied by the PUSCH, wherein n is a positive integer; and
receiving, by the network device, the PUSCH.

10. The method according to claim 9, wherein each of the n TPMIs corresponds to a matrix, a row of the matrix corresponds to a transmit antenna port for sending the PUSCH, and a column of the matrix corresponds to a transport layer of the PUSCH.

11. The method according to claim 10, wherein the n TPMIs correspond to N subbands, each of the N subbands comprises one or more continuous resource blocks RBs, TPMIs used on the RBs comprised in each subband are the same, an RB occupied by the PUSCH comprises the N subbands, wherein n is less than or equal to N, and N is a positive integer.

12. The method according to any one of claims 9 to 11, wherein the n TPMIs have a same coherence type, and the coherence type comprises a non-coherent type or a partially coherent type.

13. The method according to any one of claims 9 to 12, wherein the n TPMIs respectively fall into at least two TPMI groups, and TPMIs belonging to a same TPMI group correspond to a same power control parameter; and

when the n TPMIs belong to the non-coherent type, locations of non-zero elements of TPMIs in different TPMI groups are different; or
when the n TPMIs belong to the partially coherent type, locations of non-zero elements of TPMIs in different TPMI groups are different, and/or locations of non-zero elements of TPMIs in a same TPMI group are the same.

14. The method according to claim 12, wherein that the n TPMIs have a same coherence type further comprises:
the coherence type of the n TPMIs is the fully coherent type, and the n TPMIs correspond to a same set of power control parameters.

15. The method according to any one of claims 9 to 14, wherein the indicating, by a network device, precoding indication information that is used by a terminal device to send a PUSCH comprises:
sending, by the network device, first indication information, wherein the first indication information is used to indicate a quantity M of repetitions of the PUSCH to be sent by the terminal device in time domain, wherein M is a positive integer and M is greater than or equal to n, and each repetition in time domain is used to transmit a same transport block TB, and uses one of the n TPMIs.

16. The method according to any one of claims 9 to 15, wherein the power control parameter comprises at least one of the following power control parameters: an open-loop power control parameter, a closed-loop power control parameter, a target value of transmit power, an offset of transmit power, a path loss measurement reference signal index value, and a transmit power adjustment amount.

17. A communication apparatus, comprising a processing unit and a transceiver unit, wherein

the processing unit is configured to determine a power control parameter of a physical uplink shared channel PUSCH based on precoding indication information used by the PUSCH, wherein the precoding indication information comprises n transmitted precoding matrix indicators TPMIs, each TPMI corresponds to a set of power control parameters, at least two of each TPMI respectively corresponds to different power control parameters, and each of the n TPMIs corresponds to some time-frequency resources occupied by the PUSCH, wherein n is a positive integer; and
the transceiver unit is configured to send the PUSCH based on the power control parameter.

**18.** The apparatus according to claim 17, wherein each of the n TPMIs corresponds to a matrix, a row of the matrix corresponds to a transmit antenna port for sending the PUSCH, and a column of the matrix corresponds to a transport layer of the PUSCH.

**19.** The apparatus according to claim 18, wherein the n TPMIs correspond to N subbands, each of the N subbands comprises one or more continuous resource blocks RBs, TPMIs used on the RBs comprised in each subband are the same, an RB occupied by the PUSCH comprises the N subbands, wherein n is less than or equal to N, and N is a positive integer.

**20.** The apparatus according to any one of claims 17 to 19, wherein the n TPMIs have a same coherence type, and the coherence type comprises a non-coherent type or a partially coherent type.

**21.** The apparatus according to any one of claims 17 to 20, wherein the n TPMIs respectively fall into at least two TPMI groups, and TPMIs belonging to a same TPMI group correspond to a same power control parameter; and

when the n TPMIs belong to the non-coherent type, locations of non-zero elements of TPMIs in different TPMI groups are different; or
when the n TPMIs belong to the partially coherent type, locations of non-zero elements of TPMIs in different TPMI groups are different, and/or locations of non-zero elements of TPMIs in a same TPMI group are the same.

**22.** The apparatus according to claim 20, wherein that the n TPMIs have a same coherence type further comprises: the coherence type of the n TPMIs is the fully coherent type, and the n TPMIs correspond to a same set of power control parameters.

**23.** The apparatus according to any one of claims 17 to 22, wherein before determining the power control parameter of the PUSCH based on the precoding indication information used by the PUSCH, the transceiver unit is further configured to receive first indication information, wherein the first indication information is used to indicate a quantity M of repetitions of the PUSCH to be sent by the terminal device in time domain, wherein M is a positive integer and M is greater than or equal to n, and each repetition in time domain is used to transmit a same transport block TB, and uses one of the n TPMIs; and
the processing unit is specifically configured to determine a TPMI used by the PUSCH that is to be sent at an $m^{th}$ time, wherein $m \in \{1, 2, ... M\}$; and determine, based on the precoding matrix, a power control parameter of the PUSCH that is to be sent at the $m^{th}$ time.

**24.** The apparatus according to any one of claims 17 to 23, wherein the power control parameter comprises at least one of the following power control parameters: an open-loop power control parameter, a closed-loop power control parameter, a target value of transmit power, an offset of transmit power, a path loss measurement reference signal index value, and a transmit power adjustment amount.

**25.** The apparatus according to any one of claims 17 to 24, wherein the communication apparatus is a terminal device.

**26.** A communication apparatus, comprising a processing unit and a transceiver unit, wherein
the processing unit is configured to: indicate, through the transceiver unit, precoding indication information that is used by a terminal device to send a physical uplink shared channel PUSCH, wherein the precoding indication information comprises n transmitted precoding matrix indicators TPMIs, each TPMI corresponds to a set of power control parameters, at least two of each TPMI respectively corresponds to different power control parameters, and each of the n TPMIs corresponds to some time-frequency resources occupied by the PUSCH, wherein n is a positive integer; and receive the PUSCH through the transceiver unit.

**27.** The apparatus according to claim 26, wherein each of the n TPMIs corresponds to a matrix, a row of the matrix corresponds to a transmit antenna port for sending the PUSCH, and a column of the matrix corresponds to a transport layer of the PUSCH.

**28.** The apparatus according to claim 27, wherein the n TPMIs correspond to N subbands, each of the N subbands comprises one or more continuous resource blocks RBs, TPMIs used on the RBs comprised in each subband are the same, an RB occupied by the PUSCH comprises the N subbands, wherein n is less than or equal to N, and N is a positive integer.

**29.** The apparatus according to any one of claims 26 to 28, wherein the n TPMIs have a same coherence type, and the coherence type comprises a non-coherent type or a partially coherent type.

**30.** The apparatus according to any one of claims 26 to 29, wherein the n TPMIs respectively fall into at least two TPMI groups, and TPMIs belonging to a same TPMI group correspond to a same power control parameter; and

when the n TPMIs belong to the non-coherent type, locations of non-zero elements of TPMIs in different TPMI groups are different; or

when the n TPMIs belong to the partially coherent type, locations of non-zero elements of TPMIs in different TPMI groups are different, and/or locations of non-zero elements of TPMIs in a same TPMI group are the same.

**31.** The apparatus according to claim 29, wherein that the n TPMIs have a same coherence type further comprises: the coherence type of the n TPMIs is the fully coherent type, and the n TPMIs correspond to a same set of power control parameters.

**32.** The apparatus according to any one of claims 26 to 31, wherein the transceiver unit is specifically configured to send first indication information, wherein the first indication information is used to indicate a quantity M of repetitions of the PUSCH to be sent by the terminal device in time domain, wherein M is a positive integer and M is greater than or equal to n, and each repetition in time domain is used to transmit a same transport block TB, and uses one of the n TPMIs.

**33.** The apparatus according to any one of claims 26 to 32, wherein the power control parameter comprises at least one of the following power control parameters: an open-loop power control parameter, a closed-loop power control parameter, a target value of transmit power, an offset of transmit power, a path loss measurement reference signal index value, and a transmit power adjustment amount.

**34.** An apparatus, comprising a processor, wherein the processor is coupled to a memory;

the memory is configured to store a computer program or instructions; and

the processor is configured to execute the computer program or the instructions stored in the memory, to enable the apparatus to perform the method according to any one of claims 1 to 16.

**35.** A readable storage medium, comprising a program or instructions, wherein when the program or the instructions are run on a processor, the method according to any one of claims 1 to 16 is performed.

**36.** A communication system, wherein the communication system comprises the communication apparatus according to any one of claims 17 to 25 and the communication apparatus according to any one of claims 26 to 33.

FIG. 1

Network
device

Terminal
device

S201: Send precoding indication information used
by a physical downlink shared channel PUSCH

S202: Determine a power control
parameter of the physical
downlink shared channel
PUSCH based on the precoding
indication information used by
the physical downlink shared
channel PUSCH

S203: Physical downlink shared channel PUSCH

FIG. 2

FIG. 3

FIG. 4

Network
device

Terminal
device

S501: Send sounding reference signal indication
information used by a physical downlink shared
channel PUSCH

S502: Determine a power control
parameter of the physical
downlink shared channel PUSCH
based on the sounding reference
signal indication information used
by the physical downlink shared
channel PUSCH

S503: Physical downlink shared channel PUSCH

FIG. 5

Network
device 1

Downlink control information DCI 1

Physical uplink shared channel
PUSCH 0–Power PC 1

Downlink control
information DCI 2

Network
device 2

Physical uplink shared channel
PUSCH 1–Power PC 2

Terminal
device

FIG. 6

Network
device

Terminal
device

S701: Send fifth indication information
on a transmission resource

S702: Determine, based on the
transmission resource
corresponding to the detected
fifth indication information, a
power control parameter of a
PUSCH scheduled by the fifth
indication information

S703: Physical downlink shared channel PUSCH

FIG. 7

Antenna

Control circuit

801

800

Memory      Processor

802

Input/Output apparatus

FIG. 8

900

901

9011

9012

Antenna

Radio frequency unit

Baseband
unit BBU

Remote
radio unit
RRU

Board

9021

9022

902

Memory

Processor

FIG. 9

1000

Processor
1001

Instructions
1003

Memory
1002

Instructions
1004

Transceiver unit
1005

Antenna
1006

FIG. 10

| | INTERNATIONAL SEARCH REPORT | International application No. |
|---|---|---|
| | | **PCT/CN2020/084325** |

**A. CLASSIFICATION OF SUBJECT MATTER**

H04W 52/38(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT; CNKI; EPODOC; WPI; 3GPP: 物理上行共享信道, 预编码指示, 预编码矩阵, 功率控制, 功控, 参数, 不同, 天线, 相干, PUSCH, TPMI, PMI, power, control, parameter, different, antenna, coherent

**C. DOCUMENTS CONSIDERED TO BE RELEVANT**

| Category* | Citation of document, with indication, where appropriate, of the relevant passages | Relevant to claim No. |
|---|---|---|
| X | US 2019327693 A1 (SAMSUNG ELECTRONICS CO., LTD.) 24 October 2019 (2019-10-24) claims 1-14, description paragraphs [0119]-[0188] | 1-36 |
| A | CN 104349443 A (CHINA ACADEMY OF TELECOMMUNICATIONS TECHNOLOGY) 11 February 2015 (2015-02-11) entire document | 1-36 |
| A | CN 106455030 A (HUAWEI TECHNOLOGIES CO., LTD.) 22 February 2017 (2017-02-22) entire document | 1-36 |
| A | SAMSUNG. "View on full power UL transmission" *3GPP TSG RAN WG1 meeting #96bis R1-1904451*, 12 April 2019 (2019-04-12), entire document | 1-36 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 December 2020** | **04 January 2021** |

| Name and mailing address of the ISA/CN | Authorized officer |
|---|---|
| China National Intellectual Property Administration (ISA/CN) No. 6, Xitucheng Road, Jimenqiao, Haidian District, Beijing 100088 China | |
| Facsimile No. (86-10)62019451 | Telephone No. |

Form PCT/ISA/210 (second sheet) (January 2015)

**INTERNATIONAL SEARCH REPORT**
Information on patent family members

International application No.

**PCT/CN2020/084325**

| Patent document cited in search report | | | Publication date (day/month/year) | Patent family member(s) | | | Publication date (day/month/year) |
|---|---|---|---|---|---|---|---|
| US | 2019327693 | A1 | 24 October 2019 | WO | 2019203619 | A1 | 24 October 2019 |
| CN | 104349443 | A | 11 February 2015 | EP | 3032893 | A1 | 15 June 2016 |
| | | | | US | 2016183195 | A1 | 23 June 2016 |
| | | | | WO | 2015018357 | A1 | 12 February 2015 |
| CN | 106455030 | A | 22 February 2017 | CN | 111615199 | A | 01 September 2020 |
| | | | | WO | 2013060306 | A1 | 02 May 2013 |
| | | | | RU | 2565663 | C1 | 20 October 2015 |
| | | | | GB | 201413297 | D0 | 10 September 2014 |
| | | | | GB | 2514936 | A | 10 December 2014 |
| | | | | CN | 103096448 | A | 08 May 2013 |
| | | | | ES | 2591204 | T3 | 25 November 2016 |
| | | | | AU | 2012327574 | A1 | 19 June 2014 |
| | | | | EP | 2770785 | A1 | 27 August 2014 |

Form PCT/ISA/210 (patent family annex) (January 2015)